(19) Europäisches Patentamt / European Patent Office / Office européen des brevets

(11) **EP 4 752 791 A1**

(12) **EUROPEAN PATENT APPLICATION**

(43) Date of publication:
03.06.2026 Bulletin 2026/23

(21) Application number: **25219161.4**

(22) Date of filing: **27.11.2025**

(51) International Patent Classification (IPC):
**G06N 5/01** $^{(2023.01)}$    **G06N 7/01** $^{(2023.01)}$

(52) Cooperative Patent Classification (CPC):
**G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.12.2024 JP 2024209267**

(71) Applicants:
• **FUJITSU LIMITED**
  **Kawasaki-shi, Kanagawa 211-8588 (JP)**
• **The Governing Council of the University of Toronto**
  **Toronto, Ontario M5G 0C6 (CA)**

(72) Inventors:
• **FURUE, Yuki**
  **Kawasaki-shi, 211-8588 (JP)**

• **WATANABE, Yasuhiro**
  **Kawasaki-shi, 211-8588 (JP)**
• **YIN, Fang**
  **Kawasaki-shi, 211-8588 (JP)**
• **TAMURA, Hirotaka**
  **Yokohama-shi, 223-0066 (JP)**
• **VALENCIA SANCHEZ, Rafael Alexander**
  **Toronto, M5S 1A1 (CA)**
• **ROSENTHAL, Jeffrey Seth**
  **Toronto, M5S 1A1 (CA)**
• **SHEIKHOLESLAMI, Ali**
  **Toronto, M5S 1A1 (CA)**

(74) Representative: **Haseltine Lake Kempner LLP**
**Cheapside House**
**138 Cheapside**
**London EC2V 6BJ (GB)**

(54) **DATA PROCESSING APPARATUS, DATA PROCESSING METHOD, AND COMPUTER PROGRAM**

(57)    A search unit performs a search process. In the search process, a first process and a second process are iteratively performed. The first process is a process of selecting a change-target state variable from a plurality of state variables included in an evaluation function, based on the amounts of change in the value of the evaluation function caused by updating the values of the individual state variables and a first function that is a function representing a selection criterion for the change-target state variable according to the amounts of change. The second process is a process of updating the value of the selected change-target state variable. A control unit switches the function used by the search unit in the search process to a second function different from the first function.

$$j = \underset{i}{\mathrm{argmin}}\big[F(\Delta H_i) + log\left(-log(r_i)\right)\big]$$

$$F(\Delta H_i) = -log\ h(\exp(-\Delta H_i/T))$$

FIG. 1

EP 4 752 791 A1

**Description**

FIELD

The embodiments discussed herein relate to a data processing apparatus, a data processing method, and a computer program.

BACKGROUND

An information processing apparatus may be used to solve combinatorial optimization problems. A combinatorial optimization problem is formulated as an evaluation function including a plurality of state variables. For example, a combination of the values of the state variables is associated with a state of an Ising model. Among combinations of the values of the state variables included in the evaluation function, the information processing apparatus searches for, for example, a combination that minimizes the value of the evaluation function. In this case, the combination of the values of the state variables that minimizes the value of the evaluation function corresponds to a ground state or an optimal solution represented by the set of state variables. As a search method for obtaining an approximate solution to a combinatorial optimization problem within a practical time, there is a method based on the Markov-Chain Monte Carlo (MCMC) method, combined with the simulated annealing (SA) method, the replica exchange method, or another.

For example, there has been proposed a solution-determination system including a plurality of optimization processing units that optimize a combinatorial optimization problem to be solved by a neighborhood search algorithm. This proposed solution-determination system determines a new search area on the basis of the states of optimization processing units with high search efficiency, and transmits the new search area to other optimization processing units.

Further, there has been proposed an information processing apparatus that expresses a combinatorial optimization problem as an energy function of an Ising model and searches for a ground state. In this proposed information processing apparatus, the energy function is represented by a weighted sum of a plurality of subfunctions, and the weights of the subfunctions are changeable from the outside.

Still further, there has been proposed an information processing apparatus that solves a problem under a constraint called a two-way one-hot constraint.

Yet still further, there has been proposed an apparatus that computes an inverse temperature lower bound for a combinatorial optimization problem, based on an estimate of a maximum change in an energy function between successive timesteps of a plurality of timesteps, and computes an inverse temperature upper bound based on an estimate of a minimum change in the energy function. See, for example, the following literatures.

International Publication Pamphlet No. WO 2023/181131
International Publication Pamphlet No. WO 2021/084629
Japanese Laid-open Patent Publication No. 2023-107619
U.S. Patent Application Publication No. 2023/0401282

In computation based on an evaluation function, a state to be accepted may fall into an area where a state transition is unlikely to occur or into an area where no solution exists, in a state space, and therefore the computational efficiency may decrease.

SUMMARY

In one aspect, the present disclosure aims to improve the computational efficiency.

In one aspect, there is provided a data processing apparatus including: a search unit for performing a search process that iteratively performs a first process and a second process, the first process being configured to select a change-target state variable from a plurality of state variables included in an evaluation function, based on amounts of change in a value of the evaluation function caused by updating values of individual ones of the plurality of state variables and a first function that is a function representing a selection criterion for the change-target state variable according to the amounts of change, the second process being configured to update a value of the selected change-target state variable; and a control unit for switching the function used by the search unit in the search process to a second function different from the first function.

BRIEF DESCRIPTION OF DRAWINGS

FIG. 1 is a diagram for describing a data processing apparatus according to a first embodiment;

FIGS. 2A to 2C are diagrams illustrating examples of balancing functions;

FIG. 3 illustrates examples of characteristics of state transitions for each balancing function;

FIG. 4 illustrates an example of hardware of a data processing apparatus according to a second embodiment;

FIG. 5 illustrates an example of functions of the data processing apparatus;

FIG. 6 illustrates an example of the circuit of a search processing unit;

FIG. 7 illustrates a first control example for the balancing functions;

FIG. 8 is a flowchart illustrating an example of a search process using the first control example;

FIG. 9 is a flowchart illustrating an example of a selection and update operation in the first control example;

FIG. 10 illustrates a second control example for the balancing functions;

FIG. 11 is a flowchart illustrating an example of a search process using the second control example;

FIG. 12 illustrates a third control example for the balancing functions;

FIG. 13 is a flowchart illustrating an example of a search process using the third control example;

FIG. 14 is a flowchart illustrating an example of a selection and update operation in the third control example;

FIG. 15 illustrates a fourth control example for the balancing functions;

FIG. 16 is a flowchart illustrating an example of a search process using the fourth control example;

FIG. 17 is a flowchart illustrating an example of a selection and update operation in the fourth control example;

FIG. 18 illustrates a fifth control example for the balancing functions;

FIG. 19 is a flowchart illustrating an example of a search process using the fifth control example;

FIG. 20 is a flowchart illustrating a first example of a selection and update operation in the fifth control example; and

FIG. 21 is a flowchart illustrating a second example of the selection and update operation in the fifth control example.

DESCRIPTION OF EMBODIMENTS

Hereinafter, embodiments will be described with reference to the drawings.

[First Embodiment]

A first embodiment will be described.

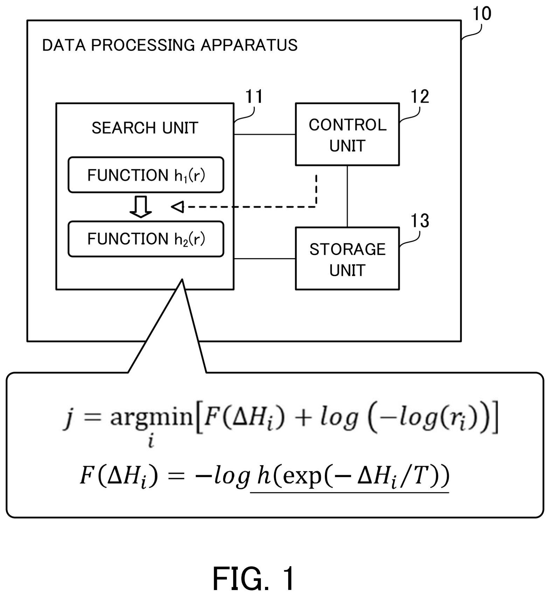

FIG. 1 is a diagram for describing a data processing apparatus according to the first embodiment.

The data processing apparatus 10 is used for computation using the MCMC method, such as solving combinatorial optimization problems and performing sampling. For solving combinatorial optimization problems, for example, the SA method, the replica exchange method, or another is used. The replica exchange method is also referred to as the exchange Monte Carlo method or the parallel tempering (PT) method. The data processing apparatus 10 includes a search unit 11, a control unit 12, and a storage unit 13.

The search unit 11 and the control unit 12 are, for example, processors such as a central processing unit (CPU), a graphics processing unit (GPU), and a digital signal processor (DSP). At least one of the search unit 11 and the control unit 12 may include a special-purpose electronic circuit such as an application specific integrated circuit (ASIC) or a field programmable gate array (FPGA). The processor executes a program stored in a memory (which may be the storage unit 13) such as a random access memory (RAM). A set of a plurality of processors may be referred to as a "multiprocessor" or simply as a "processor". The search unit 11 and the control unit 12 may be implemented by a single processor. Alternatively, the search unit 11 and the control unit 12 may be implemented by different processors.

The storage unit 13 may be a semiconductor memory such as a RAM, or may be a storage such as a hard disk drive (HDD) or a flash memory. The storage unit 13 may include a register.

A combinatorial optimization problem is formulated as a predetermined evaluation function, and is replaced with, for example, a problem that minimizes the value of the evaluation function, that is, an evaluation value. The evaluation function may be referred to as an objective function or an energy function. The evaluation function includes a plurality of state variables. The state variables are, for example, binary variables that each take a value 0 or 1. The state variables may be referred to as bits or spins.

A solution to a combinatorial optimization problem is represented by the values of a plurality of state variables. The value of the evaluation function indicates the energy of an Ising model. A solution that minimizes the value of the evaluation function represents a ground state of the Ising model and corresponds to an optimal solution to the combinatorial optimization problem.

An Ising-type evaluation function is represented by, for example, Expression (1).

$$H(\boldsymbol{x}) = -\sum_{\langle i,j \rangle} W_{ij} x_i x_j - \sum_i b_i x_i \qquad (1)$$

A state vector x represents a state of the Ising model with a plurality of state variables as elements. Expression (1) is an evaluation function formulated in a quadratic unconstrained binary optimization (QUBO) format. In the case of a problem that maximizes energy, the signs of the evaluation function may be reversed.

The first term on the right side of Expression (1) is the sum of the products of the values of two state variables and a weight coefficient over all possible pairs of state variables selectable from all state variables without omission or repetition. The subscripts i and j are the indices of state variables. Here, $x_i$ denotes the i-th state variable. $x_j$ denotes the j-th state variable. $W_{ij}$ is a coupling coefficient indicating a weight or coupling strength between the i-th state variable and the j-th state variable. Note that $W_{ij} = W_{ji}$ and $W_{ii} = 0$. The total number of state variables is denoted as n.

The second term on the right side of the Expression (1) is the sum of the products of the bias and value of each of all state variables. Here, $b_i$ denotes a bias for the i-th state variable. Problem information including the weight coefficients, the biases, and others included in the evaluation function is stored in the storage unit 13. That is, the storage unit 13 stores information on the evaluation function.

A state vector $x^{(i)}$ when the value of the i-th state variable changes is expressed by Expression (2) using the amount of change $\Delta x_i$ in the value of the i-th state variable.

$$\boldsymbol{x}^{(i)} = (x_1, \cdots, x_i + \Delta x_i, \cdots, x_n)^{\mathrm{Tr}} \qquad (2)$$

Tr denotes transposition. $x^{(i)}$ may be regarded as a neighboring state of a certain state x, which is obtained by inverting a bit i, that is, an i-th state variable, in the certain state x. The amount of change $\Delta H_i$ in the value of the evaluation function associated with the change in the value of the i-th state variable is expressed by Expression (3).

$$\Delta H_i = H\left(\boldsymbol{x}^{(i)}\right) - H(\boldsymbol{x})$$
$$= -\Delta x_i \left( \sum_j W_{ij} x_j + b_i \right) \qquad (3)$$

$\Delta x_i$ is expressed by Expression (4).

$$\Delta x_i = 1 - 2x_i \qquad (4)$$

Here, when the value of the state variable $x_i$ changes to $1 - x_i$, the increase of the state variable $x_i$ is $\Delta x_i = (1 - x_i) - x_i = 1 - 2x_i$, thereby deriving Expression (4).

$\Delta H_i$ of Expression (3) is expressed by Expression (5).

$$\Delta H_i = -h_i \Delta x_i \qquad (5)$$

Here, $h_i$ is called a local field, and is expressed by Expression (6). It is possible to calculate $\Delta H_i$ in parallel for each i.

$$h_i = \sum_j W_{ij} x_j + b_i \qquad (6)$$

With respect to the amount of change $\Delta x_j$ in the value of the j-th state variable $x_j$, the local field $h_i$ corresponding to the i-th state variable $x_i$ is updated as presented in Expression (7). It is possible to update $h_i$ in parallel for each i.

$$h_i \leftarrow h_i + W_{ij} \Delta x_j \qquad (7)$$

Here, in a method such as the steepest descent method, which always transitions a state in a direction in which the energy decreases, the state is not able to escape if it is trapped in a local solution. To avoid this, the Metropolis method or the Gibbs method is used to determine a transition probability A for a transition from a certain state to a next state due to a change of a certain state variable. That is, a change that increases the value of the evaluation function is stochastically accepted. In this case, the transition probability A with respect to the amount of change ΔH is calculated using Expression (8).

$$A(\Delta H) = \begin{cases} \min\left[1, \exp(-\beta \cdot \Delta H)\right] & \text{Metropolis} \\ 1/\left[1 + \exp\left(\beta \cdot \Delta H\right)\right] & \text{Gibbs} \end{cases} \qquad (8)$$

β is the reciprocal of a temperature value T and is referred to as an inverse temperature.

For example, in the case where the Metropolis method is used, the index j of the state variable $x_j$ to be inverted is selected using Expression (9) based on $\Delta H_i$. The method of selecting a state variable, as exemplified by Expression (9), is referred to as a Rejection-Free selection method.

$$j = \underset{i}{\mathrm{argmin}}[\max(0, \Delta H_i) + T\log\left(-\log r_i\right)] \qquad (9)$$

$r_i$ is a uniform random number in the range of $0 < r_i < 1$, corresponding to the index i. The base of log is the Napier number. The argmin operator indicates an operation of selecting i that minimizes the value of the argument. The max operator indicates an operation of selecting the maximum value among the values of its arguments.

In the MCMC method using a standard Metropolis selection presented in the following Expression (10), the probability α of a transition from the current state to a different state satisfies $\alpha \le 1$. Here, α is represented by Expression (11). α may be regarded as an escape probability from the current state. In this connection, in order to calculate α, an exponential function calculation is performed N times, and the sum thereof is calculated. On the other hand, in the Rejection-Free selection method, a transition to a next state is made with a probability of 1.

$$A_i = \min\left(1, \exp(-\beta\Delta H_i)\right) \qquad (10)$$

$$\alpha = \frac{1}{N}\sum_{i=1}^{N} A_i \qquad (11)$$

The search unit 11 executes the MCMC method based on the Rejection-Free selection method. With the Rejection-Free selection method, it is possible to select a different bit selection rule by switching a function h(r) that weights a probability ratio r = π(y)/π(x), where π( · ) is a target distribution, x is the current state, and y is a transition destination state. Also, a symmetric proposal q(y|x) = q(x|y) is assumed. For example, a Boltzmann distribution is used as the target distribution. Alternatively, a distribution other than the Boltzmann distribution may be used as the target distribution. A function h(π(y)/π(x)) = h(r) of the probability ratio is referred to as a balancing function (BF).

The control unit 12 controls the switching of the balancing function h(r) used by the search unit 11. For a certain balancing function h(r), a proposal weight $\eta_h(y|x)$ for a transition from the current state x to the transition destination state y is represented by Expression (12).

$$\eta_h(y|x) = \frac{1}{|\mathcal{N}|} h\left(\frac{\pi(y)}{\pi(x)}\right) \qquad (12)$$

|N| denotes the number $|N_x|$ of neighbors $N_x$ of the current state x. For x, $|N_x|$ is fixed.

A transition probability $P_h(x, y)$ from the current state x to the transition destination state y is represented by Expression (13). In the Rejection-Free selection method, the proposal probability equals the transition probability.

$$P_h(x,y) = \frac{\eta_h(y|x)}{\alpha_h(x)} \tag{13}$$

$\alpha_h$ is a normalization constant of $\eta_h$. $\alpha_h$ is calculated using Expression (14), as the sum of $\eta_h$ over the neighboring states x' of the current state x.

$$\alpha_h(x) = \sum_{x' \in \mathcal{N}_x} \eta_h(x'|x) \tag{14}$$

A weight $w_k$ for a k-th sample is represented by Expression (15).

$$w_k = \frac{1}{\alpha_h(x_k)} \tag{15}$$

Here, the k-th sample refers to a state $x_k$ that is obtained k-th counted from an initial state, among the states obtained through sequential state transitions from the initial state.
The balancing function h(r) satisfies Expression (16).

$$h(r) : (0, \infty) \to (0, \infty), \quad h(r) = rh(r^{-1}) \quad \text{for any } r > 0 \tag{16}$$

In the case where r has a positive value, h(r) takes a positive value. For transitions in a direction in which r increases, the value of h(r) also increases. However, the value of h(r) may remain unchanged for some ranges of r. Also, h(r) is equal to $rh(r^{-1})$.
The proposal weight $\eta_h(y|x)$ using h(r) presented by Expression (16) is referred to as locally balanced, and satisfies Expression (17). If $\eta_h(y|x)$ is a transition probability from x to y, a detailed balance is established. However, $\eta_h(y|x)$ is not normalized, and therefore does not have the property of a probability.

$$\pi(x)\eta_h(y|x) = \pi(y)\eta_h(x|y), \quad \forall x,y \in \mathcal{X} \tag{17}$$

Here, X indicates all states. A method of proposing a transition destination state y with the proposal probability $\eta_h(y|x)/\alpha_h(x)$ of Expression (13) and always accepting the transition to the state y is called informed importance tempering (IIT). For the IIT, see, for example, the following Literature 1.
Literature 1: Quan Zhou, Aaron Smith, "Rapid Convergence of Informed Importance Tempering," [online], In International Conference on Artificial Intelligence and Statistics, 2022, [searched on July 11, 2024], Internet <URL: https: arxiv.org/abs/2107.10827>
As h(r) satisfying Expression (16), various functions as exemplified by Expression (18) may be used.

$$\min(1,r), \ r/(1+r), \ 1\wedge r, \ 1\vee r, \ 1+r$$
$$\max(1,r), \ \sqrt{r}, \ \begin{cases} r^{1-\alpha} & r > 1 \\ r^{\alpha} & r \leq 1 \end{cases} \tag{18}$$

The min operator indicates an operation that selects the minimum value among its arguments. $1\wedge r$ indicates an operation that selects 1 or r, whichever is smaller. $1\vee r$ indicates an operation that selects 1 or r, whichever is larger. In Expression (18), $\alpha$ is a predetermined real number. Further, h(r) may be a linear combination of at least two selected from the functions presented in Expression (18). For example, the storage unit 13 stores information indicating a plurality of balancing functions.
Note that the expected value $E_\pi[f(x)]$ of an arbitrary function f(x) under the objective function $\pi(x)$ is calculated by a weighted sum of samples, as presented by Expression (19).

$$E_\pi[f(x)] = \frac{\sum_{k=1}^{K} w_k f(J_k)}{\sum_{k=1}^{K} w_k} \qquad (19)$$

$J_k$ denotes the k-th sample. $J_k$ may be denoted as $x_k$. K is the last sample number. In this manner, the search unit 11 is able to perform importance sampling using the sample weight $w_k$.

Here, in optimization or sampling operation based on the MCMC method, a state may be trapped in a local solution, or in an area where transitions are difficult or where no solution exists, depending on the nature of a problem or the current state in the solution search, thereby reducing the computational efficiency. For example, if a situation may occur in which a state remains tapped in a local area for a long time, the solution search time becomes long. To avoid this, the control unit 12 switches a bit selection rule (Rejection-Free selection rule) so as to facilitate a transition, depending on the state and the nature of the problem, thereby improving the efficiency of solution search and sampling.

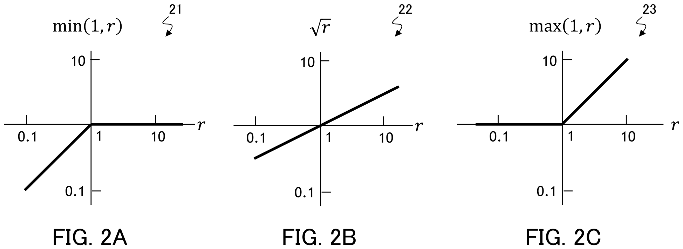

FIGS. 2A to 2C illustrate examples of balancing functions.

FIG. 2A illustrates a graph 21 of h(r) = min(1, r). FIG. 2B illustrates a graph 22 of h(r) = √r. FIG. 2C illustrates a graph 23 of h(r) = max(1, r). In each graph 21, 22, and 23, the horizontal axis represents r, and the vertical axis represents h(r).

For example, in the case where the Boltzmann distribution is used as the target distribution, r = exp(-ΔH$_i$/T). In this case, h(r) = min(1, r) is expressed by Expression (20).

$$\min(1, r) = \min\left[1, \exp\left(-\frac{\Delta H_i}{T}\right)\right] \qquad (20)$$

Expression (20) represents a standard Metropolis-type balancing function. In the case where Expression (20) is used as h(r), the search unit 11 selects the index j of a state variable whose value is to be inverted, according to Expression (21).

$$j = \operatorname*{argmin}_{i}[\max(0, \Delta H_i) + T \log\left(-\log r_i\right)] \qquad (21)$$

As described above, $r_i$ is a uniform random number in the range of $0 < r_i < 1$, corresponding to the index i. Further, h(r) = max(1, r) is expressed by Expression (22).

$$\max(1, r) = \max\left[1, \exp\left(-\frac{\Delta H_i}{T}\right)\right] \qquad (22)$$

In the case where Expression (22) is used as h(r), the search unit 11 selects the index j of the state variable whose value is to be inverted, according to Expression (23).

$$j = \operatorname*{argmin}_{i}[\min(0, \Delta H_i) + T \log\left(-\log r_i\right)] \qquad (23)$$

Further, h(r) = √r is expressed by Expression (24).

$$\sqrt{r} = \exp\left(-\frac{1}{2T}\Delta H_i\right) \qquad (24)$$

In the case where Expression (24) is used as h(r), the search unit 11 selects the index j of the state variable whose value is to be inverted, according to Expression (25).

$$j = \underset{i}{\operatorname{argmin}} \left[ \frac{\Delta H_i}{2} + T \log(-\log r_i) \right] \qquad (25)$$

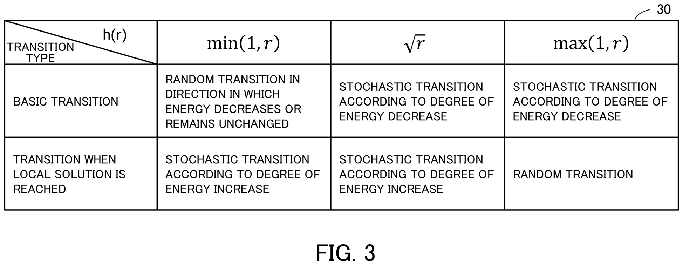

FIG. 3 illustrates examples of characteristics of state transitions for each balancing function.

As the weighting applied to the energy difference $\Delta H$ differs depending on the balancing function $h(r)$, the characteristics of state transitions depend on $h(r)$. A table 30 exemplifies, for each $h(r)$, the characteristic of a basic transition from the current state and the characteristic of a transition when a local solution is reached.

In the case of $h(r) = \min(1, r)$, the basic transition is such that the state randomly transitions in a direction in which the energy decreases or remains unchanged. The transition when a local solution is reached is such that the state transitions stochastically according to the degree of energy increase.

In the case of $h(r) = \sqrt{r}$, the basic transition is such that the state transitions stochastically according to the degree of energy decrease. The transition when a local solution is reached is such that the state transitions stochastically according to the degree of energy increase.

In the case of $h(r) = \max(1, r)$, the basic transition is such that the state transitions stochastically according to the degree of energy decrease. The transition when a local solution is reached is such that the state transitions randomly.

The qualitative transition characteristics of $\min(1, r)$, $\max(1, r)$, and $\sqrt{r}$ are as follows.

In the case of $h(r) = \min(1, r)$, a transition in the direction in which the energy increases is more likely to be avoided as the energy increases, but a transition in the direction in which the energy decreases is selected uniformly at random, regardless of the amount of change in the energy. Therefore, transitions under $h(r) = \min(1, r)$ have the characteristic of "exploration", which refers to behavior that pursues diversity and flexibility.

In the case of $h(r) = \max(1, r)$, a transition in the direction in which the energy decreases is more likely to be selected as the energy decreases, but a transition in the direction in which the energy increases is selected uniformly at random, regardless of the amount of change in the energy. Therefore, transitions under $h(r) = \max(1, r)$ have the characteristic of "exploitation", which refers to progressive or forward behavior such as improvement or speed-up.

In the case of $h(r) = \sqrt{r}$, transitions have the characteristics provided by both $\min(1, r)$ and $\max(1, r)$. Therefore, in the case of $h(r) = \sqrt{r}$, it is expected to perform a balanced search.

Here, a roulette selection algorithm for an arbitrary proposal weight $A_i$ is derived as follows. First, an expression for selecting a state variable $x_j$ whose value is to be inverted is expressed by Expression (26).

$$j = \underset{i}{\operatorname{argmax}} \left[ r_i^{1/A_i} \right] = \underset{i}{\operatorname{argmax}} \left[ \frac{\log r_i}{A_i} \right]$$
$$= \underset{i}{\operatorname{argmin}} [-\log A_i + \log(-\log r_i)] \qquad (26)$$

In the case of $A_i = \min(1, \exp(-\Delta H_i/T))$, Expression (21) is obtained. In the case of $A_i = \max(1, \exp(-\Delta H_i/T))$, Expression (23) is obtained. In the case of $A_i = \exp(-\Delta H_i/(2T))$, Expression (25) is obtained.

The probability that a state variable $x_j$ is selected is expressed by Expression (27).

$$P_j = \mathbb{P}\left(\operatorname*{argmax}_i \left[r_i^{1/A_i}\right] = j\right)$$

$$= \mathbb{P}\left(\bigcap_i \left[r_i^{1/A_i} \le r_j^{1/A_j}\right]\right) = \mathbb{P}\left(\bigcap_i \left[r_i \le r_j^{A_i/A_j}\right]\right)$$

$$= \int_0^1 p(r_j)dr_j \prod_{i=1,i\neq j}^n r_j^{A_i/A_j} = \int_0^1 dr_j\, r_j^{\left(\sum_{i=1,i\neq j}^n A_i\right)/A_j}$$

$$= \frac{A_j}{\displaystyle\sum_{i=1}^n A_i} \qquad\qquad (27)$$

In the case of the Metropolis selection rule, $A_j$ corresponds to a proposal acceptance probability.

Since $A_i \propto h(\exp(-\Delta H_i/T))$ and a constant multiplication of the expression in the parentheses of the argmin operation does not change the result of the argmin operation, Expression (28) holds.

$$j = \operatorname*{argmin}_i[-\log h(\exp(-\Delta H_i/T)) + \log(-\log r_i)] \qquad\qquad (28)$$

The search unit 11 is able to use Expression (28) as the selection expression for the state variable $x_j$ with respect to the arbitrary proposal weight $A_i$.

As illustrated in FIG. 1, the search unit 11 selects a transition destination state $x_j$ using $j = \operatorname{argmin}_i[F(\Delta_{Hi}) + \log(-\log(r_i))]$ in the search process based on the MCMC method. For example, $F(\Delta H_i) = -\log h(\exp(-\Delta H_i/T)) = -\log(h(r))$. Note that Expression (28) is equivalent to a form obtained by multiplying the quantity inside the parenthesis of the argmin operation in $j = \operatorname{argmin}_i[F(\Delta H_i) + \log(-\log(r_i))]$ by T.

Here, the search process performed by the search unit 11 involves iteratively performing the following first process and second process. The first process is a process of selecting a state variable to be changed (a change-target state variable) $x_j$ from a plurality of state variables included in the evaluation function H(x), based on the amounts of change $\Delta H_i$ in the value of the evaluation function caused by updating the values of the individual ones of the plurality of state variables and a first function h1(r) that is a function representing a selection criterion for the change-target state variable according to the amounts of change $\Delta H_i$. The function representing the selection criterion for a state variable according to $\Delta H_i$ corresponds to a balancing function. For example, in the above selection expression for the state variable $x_j$, $F(\Delta H_i) = -\log(h1(r))$. The values of the plurality of state variables may be stored in the storage unit 13. The second process is a process of updating the value of the selected change-target state variable $x_j$. In updating the value of $x_j$, the value of $x_j$ is inverted.

The control unit 12 controls switching of the balancing function used in the search process of the search unit 11 to a second function h2(r) different from the first function h1(r). After the switching, the search unit 11 continues the search process, by setting $F(\Delta H_i) = -\log(h2(r))$ in the selection expression for the state variable $x_j$. In one example, $h1(r) = \sqrt{r}$, and $h2(r) = \min(1, r)$ or $h2(r) = \max(1, r)$. In addition, the control unit 12 may perform reverse switching. Furthermore, the control unit 12 is able to use, as h1(r) and h2(r), various functions presented in Expression (18), a linear combination of at least two selected from these functions, or another function satisfying Expression (16).

The control unit 12 may switch the balancing function in various cases.

For example, the control unit 12 may switch the balancing function among a plurality of replicas used in the PT method, depending on the temperature value set for each replica. For example, the control unit 12 may set $h(r) = \min(1, r)$ for high temperatures and set $h(r) = \max(1, r)$ for low temperatures. Alternatively, the control unit 12 may set $h(r) = \max(1, r)$ for high temperatures and set $h(r) = \min(1, r)$ for low temperatures. Which balancing function is set for each temperature value may be changed according to a problem.

In addition, in a search process based on the simulated tempering (ST) method, the control unit 12 may control the search unit 11 so as to perform searches, each using a specified set of a temperature value and a balancing function, with equal probability.

Further, the control unit 12 may switch the balancing function when the number of state transitions (the number of iterations) in the search process has reached a threshold.

In addition, in the search process based on the ST method, the control unit 12 may switch the balancing function for each temperature value. For example, the control unit 12 may set h(r) = min(1, r) for high temperatures and set h(r) = max(1, r) for low temperatures. Alternatively, the control unit 12 may set h(r) = max(1, r) for high temperatures and set h(r) = min(1, r) for low temperatures. Which balancing function is set for each temperature value may be changed according to a problem.

Furthermore, the control unit 12 may switch the balancing function when detecting that a state obtained by the search unit 11 is trapped in a local solution or when detecting a situation in which it is difficult to reach a better solution. For example, in the case where ∆H$_i$ is positive for all i, the control unit 12 may detect that the state is trapped in a local solution. Here, the control unit 12 may use a sample weight w$_k$ as an example of an indicator indicating a search status. Specifically, the control unit 12 may detect a situation in which it is difficult to reach a better solution, based on the sample weight w$_k$. For example, as the sample weight w$_k$ increases, the number of transition destinations that decrease the value of the evaluation function in the vicinity of x$_k$ tends to decrease. Considering this, for example, the control unit 12 may switch the balancing function when the sample weight w$_k$ or the accumulation thereof has exceeded a threshold.

As described above, by switching the balancing function according to a problem or a solution search status, the data processing apparatus 10 is able to promote a transition to a better state and thus to improve the computational efficiency in solving combinatorial optimization problems and sampling. For example, the data processing apparatus 10 is able to suppress a state to be accepted in the search process from remaining in a local area of the state space, thereby accelerating the solution search.

The control unit 12 may set a balancing function for each of a plurality of replicas used in the PT method. Even in this case, the data processing apparatus 10 is able to improve the computational efficiency in solving combinatorial optimization problems and in sampling operation.

Here, additional description is provided regarding the target distribution obtained in the IIT and the state exchange probability between replicas in the PT method. Rejection-free MCMC (RF-MCMC) using the standard Metropolis method converges not to π(x) but to the target distribution π^(x) of Expression (29). "π^" here is a symbol in which "^" (hat symbol) is added above "π".

$$\hat{\pi} = \frac{\alpha(x)\pi(x)}{\sum_{y} \alpha(y)\pi(y)} \tag{29}$$

Regarding the target distribution π^(x), reference may be made to "Proposition 5." in the following Literature 2.

Literature 2: Jeffrey S. Rosenthal and five others, "Jump Markov Chains and Rejection-Free Metropolis Algorithms," [online], 2020, [searched on July 11, 2024], Internet <URL: https: arxiv.org/abs/1910.13316>

It is understood from Expressions (13) and (17) that the target distribution in the standard IIT takes the same form as Expression (29). Expression (30) holds from Expressions (13) and (17).

$$\alpha_h(x)\pi(x)P_h(x,y) = \alpha_h(y)\pi(y)P_h(y,x) \tag{30}$$

Therefore, Expression (31) is derived for an arbitrary balancing function h(r).

$$\hat{\pi}(x) = \frac{\alpha_h(x)\pi(x)}{\sum_{y} \alpha_h(y)\pi(y)} \tag{31}$$

Here, the proposal weight η$_h$(y|x) is expressed by Expression (32) .

$$\eta_h(y|x) = h\left(\frac{\pi(y)}{\pi(x)}\right) \tag{32}$$

The normalization constant α$_h$ is expressed by Expression (33).

$$\alpha_h(\boldsymbol{x}) = \sum_{x' \in \mathcal{N}_x} \eta_h(x'|x) \tag{33}$$

x' is a neighboring state of the current state x.

The IIT converges to $\pi_h \propto \pi(x)\alpha_h(x)$. Therefore, according to Literature 2, $\alpha_h(x, \beta)$ appears in the state exchange probability in the PT method. Specifically, let $\beta_1$, $\beta_2$, ..., and $\beta_M$ be the inverse temperature values set for M replicas. Let p (p = 1 to M) be the identification numbers of the inverse temperature values. It is assumed that Expression (34) holds for the inverse temperature value $\beta_p$, the target distribution $\pi_p$, and the energy $H_p$.

$$\beta_1 < \beta_2 < \cdots < \beta_M, \quad \pi_p \propto \exp(-\beta_p H_p),$$
$$\Delta H_p = H_{p+1} - H_p, \quad \Delta \beta_p = \beta_{p+1} - \beta_p \tag{34}$$

$\Delta H_p$ is the energy difference between adjacent inverse temperature values. $\Delta \beta_p$ is the difference between adjacent inverse temperature values. The state exchange probability $A_p$ in the PT method is expressed by Expression (35).

$$A_p = \min\left(1, \mathcal{R}_\alpha \exp(\Delta \beta_p \Delta H_p)\right) \tag{35}$$

A coefficient $R_\alpha$ included in $A_p$ is expressed by Expression (36).

$$\mathcal{R}_\alpha = \frac{\alpha_h(x_p, \beta_{p+1})\alpha_h(x_{p+1}, \beta_p)}{\alpha_h(x_{p+1}, \beta_{p+1})\alpha_h(x_p, \beta_p)} \tag{36}$$

In this connection, $R_\alpha$ may be set to 1.

[Second Embodiment]

Next, a second embodiment will be described.

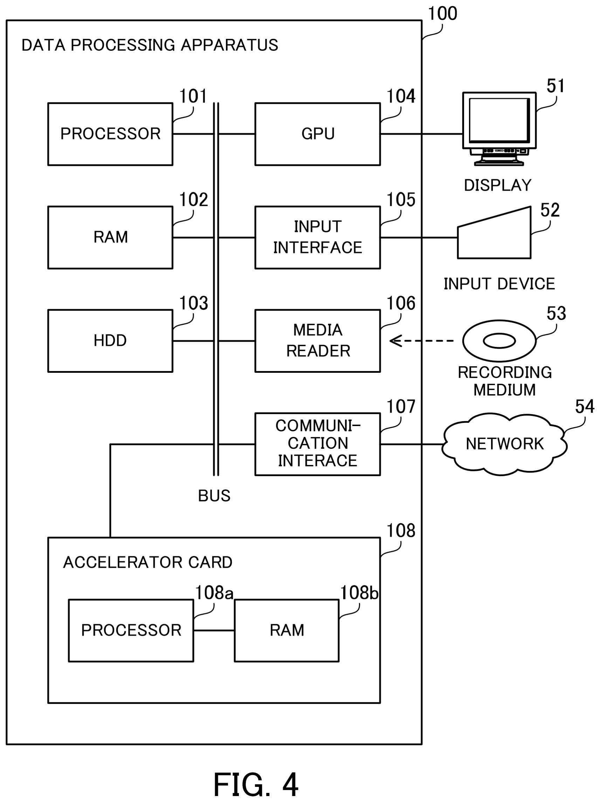

FIG. 4 illustrates an example of hardware of a data processing apparatus according to the second embodiment.

The data processing apparatus 100 includes a processor 101, a RAM 102, an HDD 103, a GPU 104, an input interface 105, a media reader 106, a communication interface 107, and an accelerator card 108. These units included in the data processing apparatus 100 are connected to a bus inside the data processing apparatus 100.

The processor 101 is an arithmetic device that executes program instructions. The processor 101 is, for example, a CPU. The processor 101 loads at least a part of a program and data from the HDD 103 into the RAM 102 and executes the program. The processor 101 may include a plurality of processor cores. The data processing apparatus 100 may include a plurality of processors. Among a plurality of processes performed by the data processing apparatus 100, different processes may be performed by different processors. A set of a plurality of processors may be referred to as a "multiprocessor" or simply a "processor". Further, the processor may be referred to as "processor circuitry".

The RAM 102 is a volatile semiconductor memory that temporarily stores programs to be executed by the processor 101 and data to be used by the processor 101 during its operation. The data processing apparatus 100 may include a memory of a type other than RAM, or may include a plurality of memories.

The HDD 103 is a non-volatile storage device that stores software programs such as an operating system (OS), middleware, and application software, and data. The data processing apparatus 100 may include another type of storage device such as a flash memory or a solid state drive (SSD), or may include a plurality of non-volatile storage devices.

The GPU 104 outputs images to a display 51 connected to the data processing apparatus 100 in accordance with instructions from the processor 101. The display 51 may be any type of display such as a cathode ray tube (CRT) display, a liquid crystal display (LCD), a plasma display, or an organic electro-luminescence (OEL) display.

The input interface 105 receives input signals from an input device 52 connected to the data processing apparatus 100 and outputs the input signals to the processor 101. As the input device 52, a pointing device such as a mouse, a touch panel, a touch pad, or a trackball, a keyboard, a remote controller, a button switch, or the like may be used. A plurality of types of input devices may be connected to the data processing apparatus 100.

The media reader 106 is a reading device that reads programs and data recorded on a recording medium 53. As the recording medium 53, for example, a magnetic disk, an optical disc, a magneto-optical disk (MO), a semiconductor memory, or the like may be used. Magnetic disks include a flexible disk (FD) and an HDD. Optical discs include a compact disc (CD) and a digital versatile disc (DVD).

For example, the media reader 106 copies a program or data read from the recording medium 53 to another recording medium such as the RAM 102 or the HDD 103. The read program is executed by, for example, the processor 101. The recording medium 53 may be a portable recording medium, and may be used to distribute programs and data. The recording medium 53 and the HDD 103 may be referred to as computer-readable storage media.

The communication interface 107 is connected to a network 54 and communicates with other information processing apparatuses via the network 54. The communication interface 107 may be a wired communication interface connected to a wired communication device such as a switch or a router, or may be a wireless communication interface connected to a wireless communication device such as a base station or an access point.

The accelerator card 108 is a hardware accelerator that searches for solutions to combinatorial optimization problems. The accelerator card 108 includes a processor 108a and a RAM 108b. The processor 108a is, for example, a GPU, a DSP, an ASIC, or an FPGA. The RAM 108b stores data that is used by the processor 108a during its operation. For example, the RAM 108b holds data that is used by the processor 109a in a search process and solutions found by the processor 108a. The RAM may be a dynamic random access memory (DRAM), a static random access memory (SRAM), or both of them.

The accelerator card 108 is a hardware accelerator that searches for solutions to problems represented by the Ising-type energy function of Expression (1) using the MCMC method. The accelerator card 108 uses the above-described IIT method to select state transition destinations in the MCMC method. By executing the MCMC method, the PT method, in which states of the Ising model are exchanged between a plurality of temperatures, or another method, the accelerator card 108 may serve as a sampler that performs state sampling according to a target distribution such as the Boltzmann distribution, or importance sampling based on Expression (19) described above, To solve combinatorial optimization problems, the accelerator card 108 executes the PT method, the ST method, the SA method, or others.

The PT method is a technique of executing the MCMC method independently using a plurality of temperature values. An independent computational resource that executes the MCMC method is called a replica. In the PT method, either the states obtained by a plurality of replicas corresponding to a plurality of temperature values, or the temperature values, are exchanged between replicas as appropriate. In the case where the PT method is used, the accelerator card 108 iteratively performs an operation of performing state transition trials in parallel across a plurality of replicas, and every time a certain number of trials are completed, exchanging states or temperature values between a pair of replicas having adjacent temperature values with a predetermined exchange probability.

The ST method is a technique of executing the MCMC method using discrete temperatures as random variables. Here, let X be a variable to be sampled using the ST method, and let $\beta = (\beta_1, \beta_2, ..., \beta_M)$ denote the inverse temperature values. In this case, the joint distribution of X and $\beta$ is expressed by Expression (37).

$$\pi(\boldsymbol{X}, \beta) = \pi(\boldsymbol{X}|\beta)\pi(\beta)$$
$$= \frac{1}{Z_{ST}} \exp\left(-\beta H(\boldsymbol{X})\right) e^{\omega(\beta)} \tag{37}$$

$Z_{ST}$ in Expression (37) is expressed by Expression (38).

$$Z_{ST} = \sum_{\boldsymbol{X}, \beta} \exp\left(-\beta H(\boldsymbol{X})\right) e^{\omega(\beta)} \tag{38}$$

Note that $\omega(\beta)$ is determined such that the marginal distribution $P(\beta) = \Sigma_x \pi(X, \beta)$ becomes uniform.

The SA method is a technique for efficiently finding an optimal solution by lowering the temperature value used during sampling from high temperature to low temperature, that is, by increasing the inverse temperature $\beta$. For example, in the case where the SA method is used, the accelerator card 108 iteratively performs an operation in which a predetermined number of state transition trials are performed at a fixed temperature value and then the temperature value is lowered.

Here, the processors 108a and 101 are examples of the search unit 11 and the control unit 12 of the first embodiment, respectively. Alternatively, the search unit 11 and the control unit 12 may be implemented by the processor 108a. For example, a first arithmetic circuit and a second arithmetic circuit (not illustrated) included in the processor 108a may serve as the search unit 11 and the control unit 12, respectively. The search unit 11 and the control unit 12 may be implemented by the processor 101. For example, a first processor core and a second processor core (not illustrated) included in the processor 101 may serve as the search unit 11 and the control unit 12, respectively. The RAMs 102 and 108b and the HDD 103 are examples of the storage unit 13 of the first embodiment.

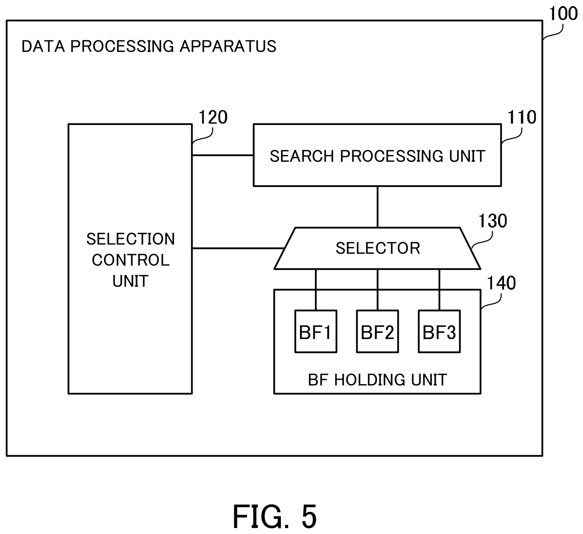

FIG. 5 illustrates an example of functions of the data processing apparatus.

The data processing apparatus 100 includes a search processing unit 110, a selection control unit 120, a selector 130, and a BF holding unit 140.

The search processing unit 110 executes the MCMC method. The search processing unit 110 solves combinatorial optimization problems using, for example, the PT method, the ST method, or the SA method. The search processing unit 110 selects a transition destination state according to Expression (28) in the MCMC method. The balancing function $h(r) = h(\exp(-\Delta H_i/T))$ in Expression (28) is set under the control of the selection control unit 120.

The selection control unit 120 controls switching of the bit selection rule used in the search process of the search processing unit 110. The selection control unit 120 switches the bit selection rule, for example, at predetermined timing according to a search status of the search processing unit 110. The selection control unit 120 is able to switch the bit selection rule (state variable selection rule) by switching the balancing function $h(r) = h(\exp(-\Delta H_i/T))$ in Expression (28).

The selector 130 acquires information indicating the balancing function (BF) specified by the selection control unit 120, from the BF holding unit 140, and supplies the information to the search processing unit 110.

The BF holding unit 140 holds information indicating a plurality of balancing functions. In the example of FIG. 5, information indicating three balancing functions BF1, BF2, and BF3 is held. For example, $BF1 = \min(1, r)$, $BF2 = \sqrt{r}$, and $BF3 = \max(1, r)$. In this connection, the BF holding unit 140 may hold information indicating balancing functions other than these. The BF holding unit 140 may also hold information indicating two balancing functions or four or more balancing functions.

As a balancing function, any of the functions exemplified in Expression (18), a linear combination of at least two selected from these functions, or another function satisfying Expression (16) may be used.

Here, the search processing unit 110 and the selection control unit 120 are implemented by the processor 108a. Alternatively, the search processing unit 110 and the selection control unit 120 may be implemented by the processor 101 executing a program stored in the RAM 102. Yet alternatively, the search processing unit 110 may be implemented by the processor 108a, and the selection control unit 120 may be implemented by the processor 101. The selector 130 may be implemented by the processor 108a or the processor 101. Furthermore, the BF holding unit 140 is implemented using a storage space of the RAM 102 or 108b or the HDD 103.

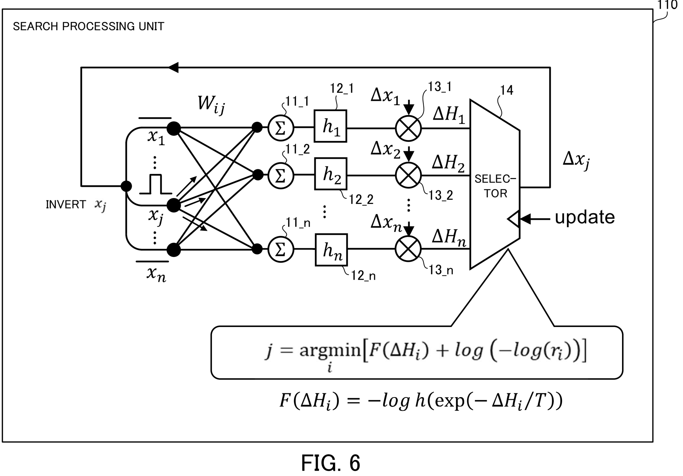

FIG. 6 illustrates an example of the circuit of the search processing unit.

The search processing unit 110 includes $\Sigma$ calculators 11_1, 11_2, ..., and 11_n, h holding units 12_1, 12_2, ..., and 12_n, multipliers 13_1, 13_2, ..., and 13_n, and a selector 14. Here, n denotes the total number of state variables and is an integer greater than or equal to two.

The $\Sigma$ calculators 11_1 to 11_n calculate the first term on the right side of Expression (6) for indices i = 1 to n, based on the values of the plurality of state variables. The values of the plurality of state variables may be held in the RAM 108b.

The h holding units 12_1 to 12_n hold $h_i$ of Expression (6) for i = 1 to n. The storage area of the h holding units 12_1 to 12_n may be implemented using the RAM 108b. In the case where the value of the state variable $x_j$ is updated, $h_i$ is updated according to Expression (7).

The multipliers 13_1 to 13_n calculate $\Delta H_i$ of Expression (5) for i = 1 to n, and output the calculated $\Delta H_i$ to the selector 14.

The selector 14 selects the state variable $x_j$ whose value is to be inverted, based on $\Delta H_i$ and Expression (28). Specifically, $j = \mathrm{argmin}_i[F(\Delta H_i) + \log(-\log(r_i))]$, where $F(\Delta H_i) = -\log h(\exp(-\Delta H_i/T))$.

The selector 14 outputs $\Delta x_j$ according to the selection of the state variable $x_j$ and inverts $x_j$. In this way, a state transition is executed iteratively in the search processing unit 110.

Upon receiving an update signal (update) for h(r) from the selector 130, the selector 14 updates h(r) in the selection expression for j, to h(r) specified by the update signal. As a result, the bit selection rule in the selector 14 is switched.

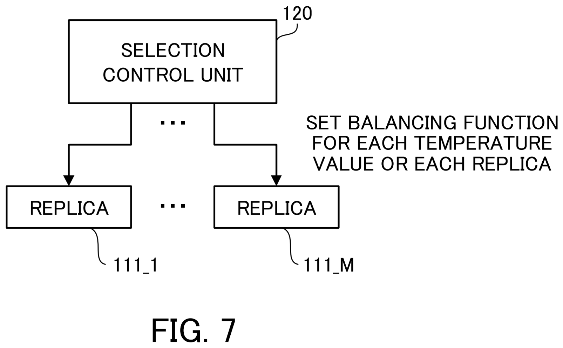

FIG. 7 illustrates a first control example for the balancing functions.

For example, the search processing unit 110 executes the PT method. In this case, the search processing unit 110 includes M replicas 111_1 to 111_M. For example, the search processing unit 110 may implement a plurality of replicas by performing pipeline processing using the circuit set exemplified in FIG. 6, or by providing the circuit set exemplified in FIG. 6 in plurality. A different temperature value is assigned to each replica.

When the PT method is executed by the search processing unit 110, the selection control unit 120 sets a balancing function for each temperature value or for each replica.

For example, the selection control unit 120 may set $h(r) = \min(1, r)$ for replicas with high temperatures above the median of the temperature values assigned to the replicas, and may set $h(r) = \max(1, r)$ for replicas with low temperatures below the median. This setting enables transitions to various states on the high temperature side, and accelerates transitions in the direction in which the energy decreases on the low temperature side. Alternatively, the selection control unit 120 may set $h(r) = \max(1, r)$ for replicas with high temperatures, and may set $h(r) = \min(1, r)$ for replicas with low temperatures. Furthermore, the selection control unit 120 may change the balancing function set for high temperatures and the balancing function set for low temperatures, depending on the type of a problem or the like.

Alternatively, the selection control unit 120 may keep the balancing functions initially set for the respective replicas, throughout the entire search process. Yet alternatively, the selection control unit 120 may change each of the balancing functions set for the replicas to another balancing function, periodically at fixed time intervals or every time a certain number of iterations are completed.

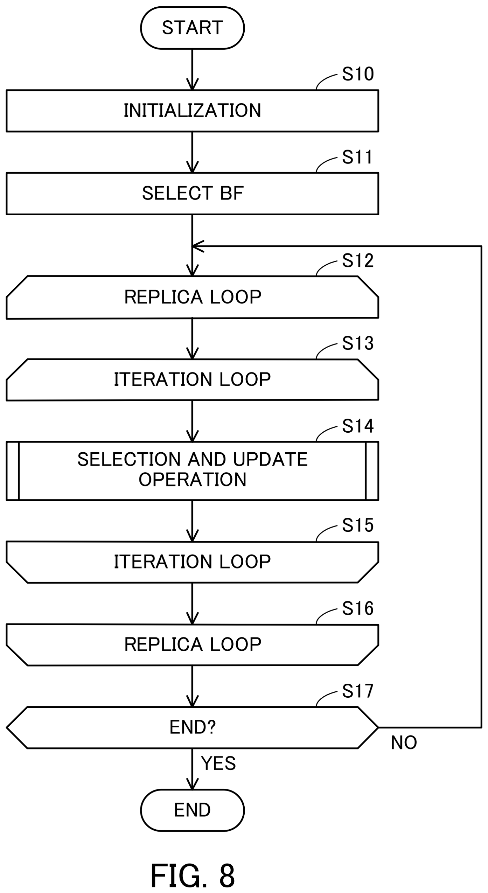

FIG. 8 is a flowchart illustrating an example of a search process using the first control example.

(S10) The search processing unit 110 performs initialization. In the initialization, the search processing unit 110 sets information on the energy function of Expression (1), an initial solution, parameters including temperature values to be used and a termination condition for the search process, and others.

(S11) The selection control unit 120 selects one balancing function (BF) to be used in Expression (28), for each temperature value of the PT method. The selection control unit 120 assigns a temperature value and a balancing function corresponding to the temperature value, to each replica of the search processing unit 110. The setting of the balancing functions in the search processing unit 110 by the selection control unit 120 is performed via the selector 130.

(S12) The search processing unit 110 executes steps S13 to S15 for each replica (replica loop). Steps S13 to S15 are executed in parallel across the replicas.

(S13) The search processing unit 110 iteratively executes step S14 on a per-replica basis (iteration loop).

(S14) The search processing unit 110 performs, for the replica in question, a selection and update operation of selecting a state variable and updating the value of the selected state variable. Details of the selection and update operation will be described later.

(S15) When the search processing unit 110 completes the iteration loop, the process proceeds to step S16. When the number of iterations of step S14 has reached a predetermined number, the iteration loop ends.

(S16) When the replica loop is completed, the search processing unit 110 performs a state exchange process according to the exchange probability $A_p$ of Expression (35), for a pair of replicas having adjacent temperature values. Then, the process proceeds to step S17. Here, $R_\alpha$ in Expression (35) may be calculated using Expression (36), or may be set to $R_\alpha = 1$. When the iteration loop is completed for all the replicas, the replica loop is completed.

(S17) The search processing unit 110 determines whether the termination condition for the search process is satisfied. If the termination condition is satisfied, the search process is completed. If the termination condition is not satisfied, the process proceeds to step S12. The termination condition may be, for example, that the replica loop of steps S12 to S16 has been performed for a certain period of time or for a certain number of iterations. After the search process is completed, the search processing unit 110 outputs, for example, a solution with the minimum energy obtained thus far.

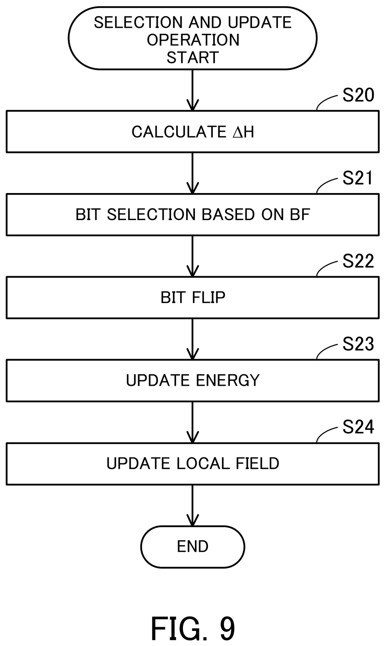

FIG. 9 is a flowchart illustrating an example of the selection and update operation in the first control example.

The processing of the selection and update operation in FIG. 9 corresponds to step S14.

(S20) The search processing unit 110 calculates $\Delta H$ for i = 1 to n using Expression (5).

(S21) The search processing unit 110 performs bit selection based on the balancing function (BF). Specifically, the search processing unit 110 selects a state variable whose value is to be inverted, according to Expression (28). The balancing function $h(r) = h(\exp(-\Delta H_i/T))$ included in Expression (28) is the one specified by the selection control unit 120 for the temperature value of the replica in question.

(S22) The search processing unit 110 performs a bit flip. Specifically, the search processing unit 110 inverts the value of the state variable selected in step S21.

(S23) The search processing unit 110 updates the energy H according to the inversion of the value of the state variable. Here, the search processing unit 110 holds the energy H of the current state of the replica in question. The updated energy after the inversion of the value of the state variable $x_j$ is $H + \Delta H_j$.

(S24) The search processing unit 110 updates the local field $h_i$ based on Expression (7). The selection and update operation is then completed.

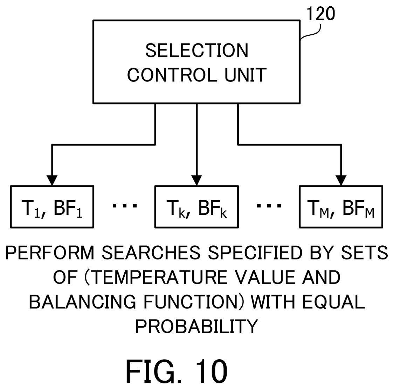

FIG. 10 illustrates a second control example for the balancing functions.

For example, the search processing unit 110 executes the ST method. In the ST method, the search processing unit 110 changes the temperature value used in a search, on the basis of a predetermined criterion at fixed time intervals. For example, M temperature values $T_1$ to $T_M$ are prepared in advance.

In the case where the ST method is executed by the search processing unit 110, the selection control unit 120 controls the search processing unit 110 so that searches specified by respective sets $(T_1, BF_1)$, ..., $(T_k, BF_k)$, ..., and $(T_M, BF_M)$ of temperature values and balancing functions are performed with equal probability. For example, the selection control unit 120 may set $h(r) = \min(1, r)$ for high temperatures above the median of the temperature values assigned to replicas and set $h(r) = \max(1, r)$ for low temperatures below the median. Alternatively, the selection control unit 120 may set $h(r) = \max(1, r)$ for high temperatures and set $h(r) = \min(1, r)$ for low temperatures. Alternatively, the selection control unit 120 may randomly assign a balancing function to each temperature value.

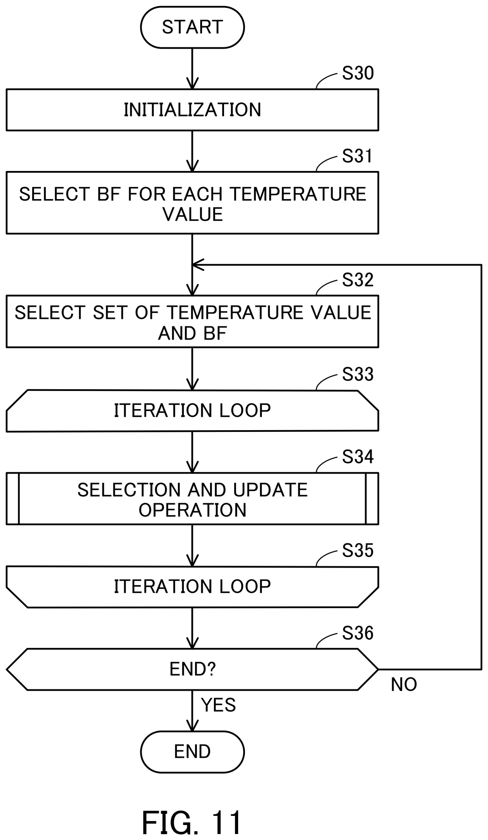

FIG. 11 is a flowchart illustrating an example of a search process using the second control example.

(S30) The search processing unit 110 performs initialization.

(S31) The selection control unit 120 selects a balancing function (BF) for each temperature value.

(S32) The selection control unit 120 selects, from the plurality of sets of temperature values and balancing functions, one set to be used next. At this time, the selection control unit 120 ensures that each set of a temperature value and a balancing function is selected with equal probability throughout the entire search process. The selection control unit 120 then sets the selected set of a temperature value and a balancing function in the search processing unit 110.

(S33) The search processing unit 110 iteratively executes step S34 (iteration loop).

(S34) The search processing unit 110 performs the selection and update operation for a state variable. The selection and update operation follows the procedure of FIG. 9.

(S35) When the search processing unit 110 completes the iteration loop, the process proceeds to step S36. In this connection, the iteration loop is completed when the number of iterations of step S34 has reached a predetermined number.

(S36) The search processing unit 110 determines whether a termination condition for the search process is satisfied. If the termination condition is satisfied, the search process is completed. If the termination condition is not satisfied, the process proceeds to step S32. After the search process is completed, the search processing unit 110 outputs, for example, a solution with the minimum energy obtained thus far.

Note that the search processing unit 110 may also execute the SA method. In the SA method, the search processing unit 110 performs the search process while gradually lowering the temperature value from the highest temperature value to the lowest temperature value. In the case where the SA method is executed by the search processing unit 110, the selection control unit 120 may set a balancing function corresponding to the current temperature value to be used in the search process, in the search processing unit 110.

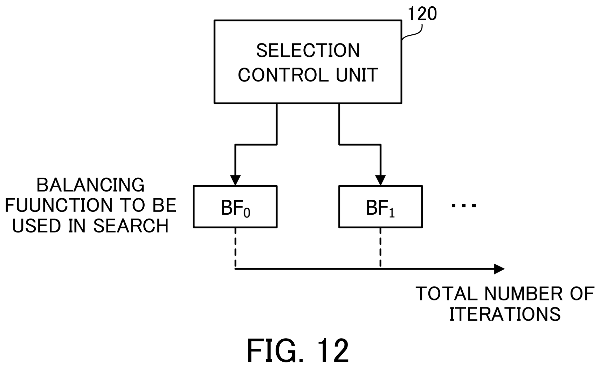

FIG. 12 illustrates a third control example for the balancing functions.

In the case where the PT method is executed by the search processing unit 110, the selection control unit 120 may switch the balancing function to be used in a search, every time a predetermined number of iterations are completed.

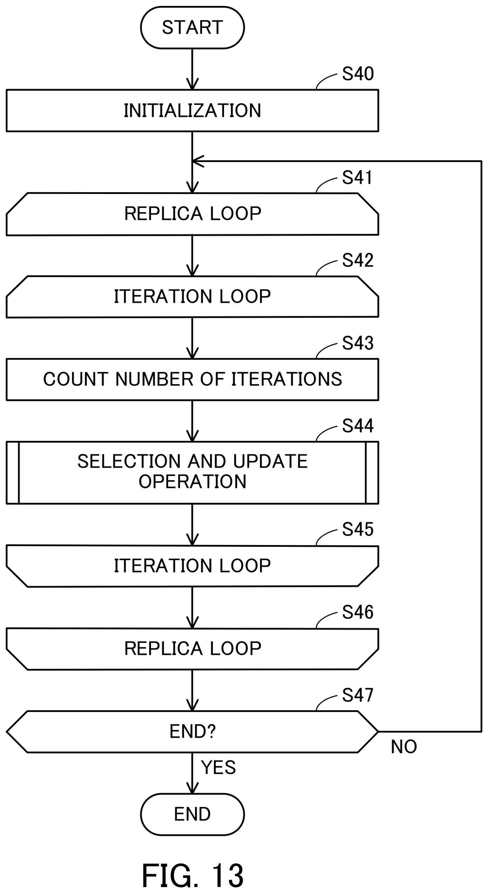

FIG. 13 is a flowchart illustrating an example of a search process using the third control example.

(S40) The search processing unit 110 performs initialization. The selection control unit 120 sets a predetermined initial balancing function for each replica of the search processing unit 110.

(S41) The search processing unit 110 executes steps S42 to S45 for each replica (replica loop). Steps S42 to S45 are executed in parallel across the replicas.

(S42) The search processing unit 110 and the selection control unit 120 iteratively execute steps S43 and S44 for each replica (iteration loop).

(S43) The selection control unit 120 counts the number of iterations for the replica in question.

(S44) The search processing unit 110 and the selection control unit 120 perform a selection and update operation for a state variable. Details of the selection and update operation for a state variable will be described later.

(S45) When the search processing unit 110 completes the iteration loop, the process proceeds to step S46. In this connection, the iteration loop is completed when the number of iterations of step S44 has reached a predetermined number.

(S46) When the replica loop is completed, the search processing unit 110 performs a state exchange process according to the exchange probability $A_p$ of Expression (35), for a pair of replicas having adjacent temperature values. Then, the process proceeds to step S47. Here, $R_\alpha$ in Expression (35) may be calculated using Expression (36), or may be set to $R_\alpha = 1$. When the iteration loop is completed for all the replicas, the replica loop is completed.

(S47) The search processing unit 110 determines whether a termination condition for the search process is satisfied. If the termination condition is satisfied, the search process is completed. If the termination condition is not satisfied, the process proceeds to step S41. When the search process is completed, the search processing unit 110 outputs, for example, a solution with the minimum energy obtained thus far.

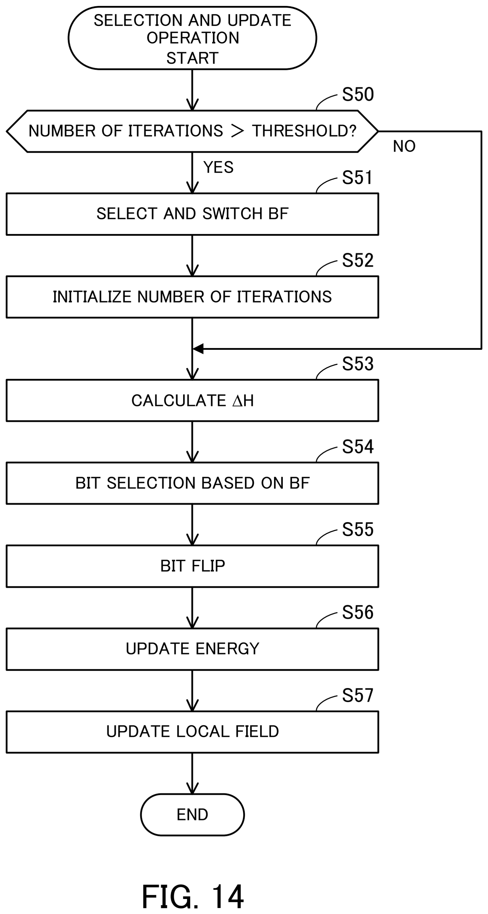

FIG. 14 is a flowchart illustrating an example of the selection and update operation in the third control example.

The processing of the selection and update operation in FIG. 14 corresponds to step S44.

(S50) The selection control unit 120 determines whether the number of iterations > a threshold. If the number of iterations > the threshold, the process proceeds to step S51. If the number of iterations $\leq$ the threshold, the process proceeds to step S53.

(S51) The selection control unit 120 selects and switches the balancing function for the replica in question. More specifically, the selection control unit 120 sets a balancing function different from the current balancing function for the replica.

(S52) The selection control unit 120 initializes the number of iterations counted for the replica in question.

(S53) The search processing unit 110 calculates $\Delta H$ for i = 1 to n using Expression (5).

(S54) The search processing unit 110 performs bit selection based on the balancing function (BF). Specifically, the search processing unit 110 selects a state variable whose value is to be inverted, according to Expression (28). The balancing function $h(r) = h(\exp(-\Delta H_i/T))$ included in Expression (28) is the one specified by the selection control unit 120 for the replica in question.

(S55) The search processing unit 110 performs a bit flip. Specifically, the search processing unit 110 inverts the value of the state variable selected in step S54.

(S56) The search processing unit 110 updates the energy H according to the inversion of the value of the state variable.

(S57) The search processing unit 110 updates the local field $h_i$ based on Expression (7). The selection and update operation is then completed.

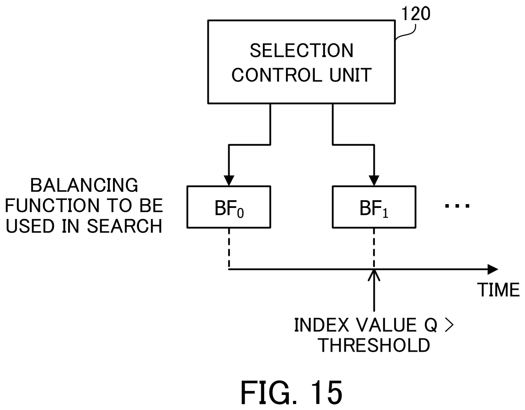

FIG. 15 illustrates a fourth control example for the balancing functions.

In the case where the PT method is executed by the search processing unit 110, the selection control unit 120 may obtain an index value Q representing a search status for each replica, and switch the balancing function to be used in the search in that replica, at timing based on the comparison between the index value Q and a threshold.

The index value Q is, for example, the sample weight $w_k$ of Expression (15). As described earlier, the sample weight $w_k$ is the reciprocal of the normalization constant $\alpha_h(x_k)$ of Expression (14), where $x_k$ is the k-th sampled state. Here, the normalization constant $\alpha_h(x_k)$ has a larger value as there are more neighboring states that cause a large energy decrease around the state $x_k$, that is, as there are more better solutions around the state $x_k$. Since $w_k$ is the reciprocal of $\alpha_h(x_k)$, a larger $w_k$ indicates that there are fewer better solutions around the current state $x_k$. For this reason, by switching the balancing function, for example, in the case where the value of $w_k$ exceeds a threshold, the selection control unit 120 is able to increase the likelihood of a transition to a better solution in the replica in question.

The index value Q may be a value obtained by accumulating $w_k$ for each k, or may be a value obtained by filtering (for example, smoothing) the sequence of $w_k$. The smoothing may be performed by taking a moving average of $w_k$, for example.

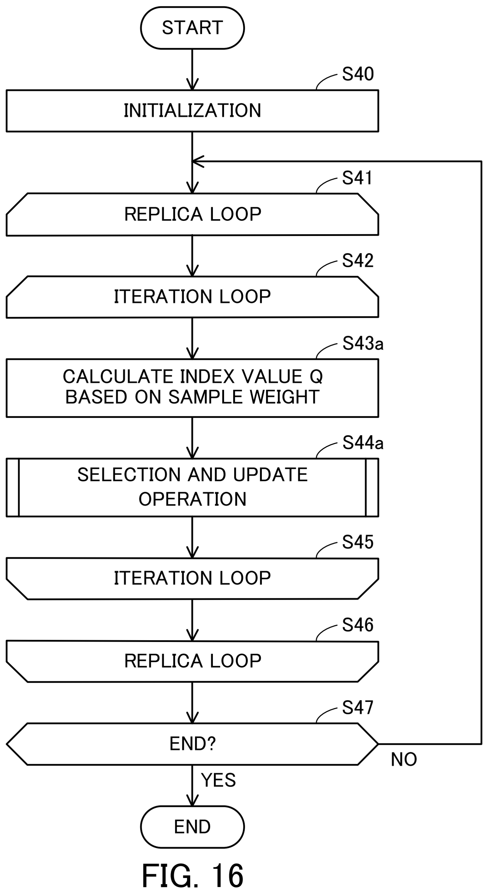

FIG. 16 is a flowchart illustrating an example of a search process using the fourth control example.

Here, the procedure of FIG. 16 is different from that of FIG. 13 in that the procedure of FIG. 16 includes steps S43a and S44a to replace steps S43 and S44. Therefore, the following describes steps S43a and S44a, and the description of steps S40 to S42 and S45 to S47 is omitted.

(S43a) The selection control unit 120 calculates the index value Q based on the sample weight $w_k$ for the replica in question. As described earlier, the sample weight $w_k$ indicates the weight of the current state in the replica. For example, Q = $w_k$. In this connection, the index value Q may be a value obtained by accumulating $w_k$ for each k, or may be a value obtained by filtering (for example, smoothing) the sequence of $w_k$.

(S44a) The search processing unit 110 and the selection control unit 120 perform a selection and update operation for a state variable. Details of the selection and update operation for a state variable will be described later. Then, the process proceeds to step S45.

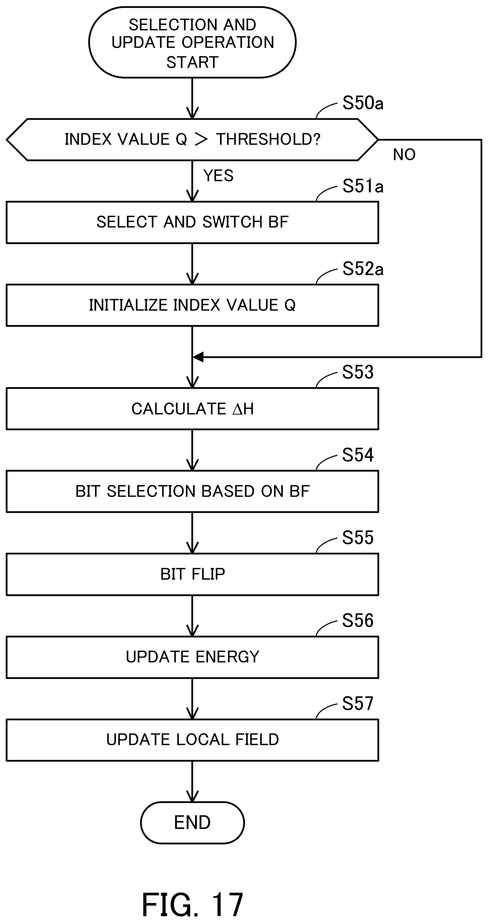

FIG. 17 is a flowchart illustrating an example of the selection and update operation in the fourth control example.

The processing of the selection and update operation of FIG. 17 corresponds to step S44a.

Here, the procedure of FIG. 17 is different from that of FIG. 14 in that the procedure of FIG. 17 includes steps S50a to S52a to replace steps S50 to S52. Therefore, the following descries steps S50a to S52a, and the description of steps S53 to S57 is omitted.

(S50a) The selection control unit 120 determines whether the index value Q > a threshold. If the index value Q > the threshold, the process proceeds to step S51a. If the index value Q ≤ the threshold, the process proceeds to step S53.

(S51a) The selection control unit 120 selects and switches the balancing function for the replica in question. The selection control unit 120 sets a balancing function different from the current balancing function for the replica.

(S52a) The selection control unit 120 initializes the index value Q for the replica in question. The initialization of the index value Q may be performed in the case where the cumulative value of $w_k$ or a filtered value of $w_k$ is used as the index value Q. On the other hand, in the case of Q = $w_k$, the initialization of the index value Q may be omitted, and thus step S52a may be skipped. Then, the process proceeds to step S53.

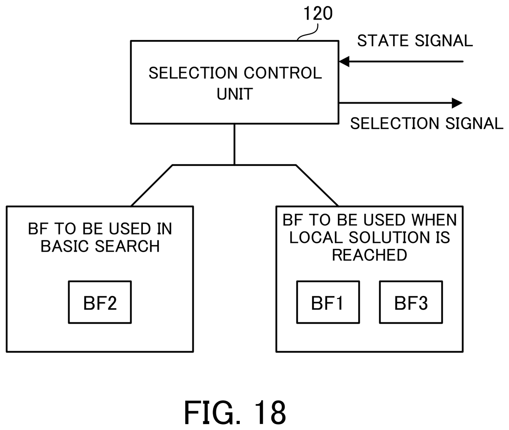

FIG. 18 illustrates a fifth control example for the balancing functions.

The selection control unit 120 separately prepares a balancing function to be used in a basic search and a balancing function to be used when it is determined that a local solution is reached. The selection control unit 120 may output a selection signal specifying a balancing function to be used for each replica, based on a state signal for each replica received from the search processing unit 110 executing the PT method.

The balancing function to be used in the basic search is, for example, BF2 = $\sqrt{r}$. The balancing function to be used in the case where a local solution is reached, for example, BF1 = min(1, r) or BF3 = max(1, r).

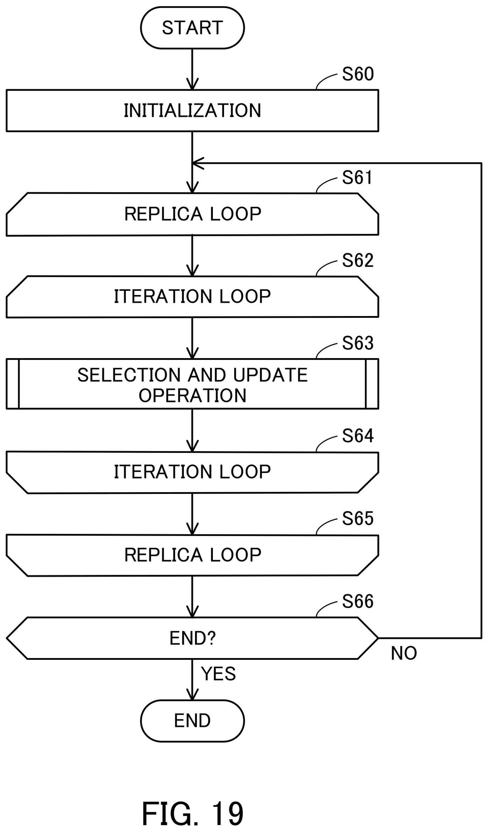

FIG. 19 is a flowchart illustrating an example of a search process using the fifth control example.

(S60) The search processing unit 110 performs initialization. The selection control unit 120 sets a balancing function to be used in the basic search, for each replica of the search processing unit 110.

(S61) The search processing unit 110 executes steps S62 to S64 for each replica (replica loop). Steps S62 to S64 are executed in parallel across the replicas.

(S62) The search processing unit 110 and the selection control unit 120 iteratively execute step S63 for each replica (iteration loop).

(S63) The search processing unit 110 and the selection control unit 120 perform a selection and update operation for a state variable. Details of the state variable selection and update operation will be described later.

(S64) When the search processing unit 110 completes the iteration loop, the process proceeds to step S65. In this connection, the iteration loop is completed when the number of iterations of step S63 has reached a predetermined number.

(S65) When the replica loop is completed, the search processing unit 110 performs a state exchange process according to the exchange probability $A_p$ of Expression (35), for a pair of replicas having adjacent temperature values. Then, the process proceeds to step S66. Here, $R_\alpha$ in Expression (35) may be calculated using Expression (36), or may be set to $R_\alpha = 1$. When the iteration loop is completed for all the replicas, the replica loop is completed.

(S66) The search processing unit 110 determines whether a termination condition for the search process is satisfied. If the termination condition is satisfied, the search process is completed. If the termination condition is not satisfied, the process proceeds to step S61. After the search processing is completed, the search processing unit 110 outputs, for example, a solution with the minimum energy obtained thus far.

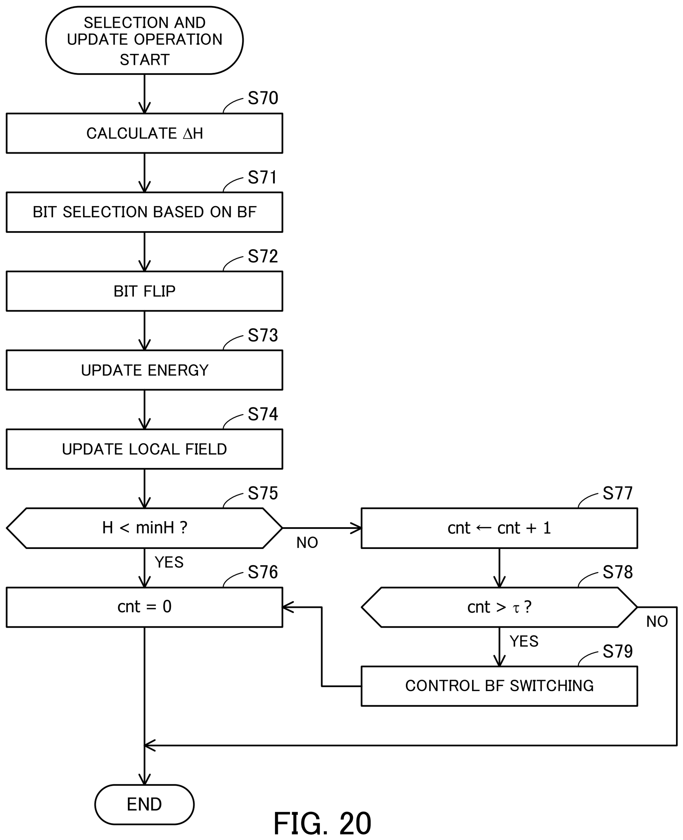

FIG. 20 is a flowchart illustrating a first example of the selection and update operation in the fifth control example.

The processing of the selection and update operation in FIG. 20 corresponds to step S63.

(S70) The search processing unit 110 calculates $\Delta H$ for i = 1 to n using Expression (5).

(S71) The search processing unit 110 performs bit selection based on the balancing function (BF). Specifically, the search processing unit 110 selects a state variable whose value is to be inverted, according to Expression (28). The balancing function $h(r) = h(\exp(-\Delta H_i/T))$ included in Expression (28) is the one specified by the selection control unit 120 for the replica in question.

(S72) The search processing unit 110 performs a bit flip. Specifically, the search processing unit 110 inverts the value of the state variable selected in step S71.

(S73) The search processing unit 110 updates the energy H according to the inversion of the value of the state variable.

(S74) The search processing unit 110 updates the local field $h_i$ based on Expression (7).

(S75) The selection control unit 120 determines whether H < minH, where minH is the minimum energy obtained thus far in the selection and update operation. If H < minH, the selection control unit 120 updates minH to the current H. Then, the process proceeds to step S76. If H ≥ minH, the process proceeds to step S77.

(S76) The selection control unit 120 resets cnt to 0. Then, the selection and update operation is completed.

(S77) The selection control unit 120 increments cnt. That is, the selection control unit 120 updates cnt to cnt + 1.

(S78) The selection control unit 120 determines whether cnt > τ, where τ is a predetermined count threshold. If cnt > τ, the process proceeds to step S79. If cnt ≤ τ, the selection and update operation is completed.

(S79) The selection control unit 120 controls the switching of the balancing function (BF). For example, in the case where the balancing function currently used by the search processing unit 110 is the balancing function that is for the basic search, the selection control unit 120 switches the balancing function to the balancing function to be used in the case where a local solution is reached. On the other hand, in the case where the balancing function currently used by the search processing unit 110 is the balancing function that is for the case where a local solution is reached, the selection control unit 120 switches the balancing function to the balancing function to be used in the basic search. Then, the process proceeds to step S76.

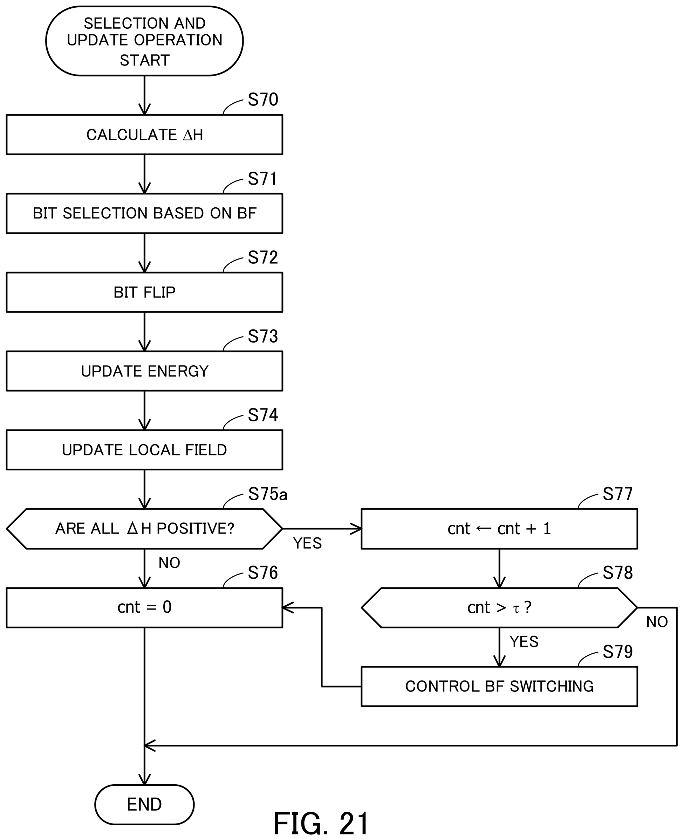

FIG. 21 is a flowchart illustrating a second example of the selection and update operation in the fifth control example.

The processing of the selection and update operation in FIG. 21 corresponds to step S63.

Here, the procedure of FIG. 21 is different from the procedure of FIG. 20 in that the procedure of FIG. 21 includes step S75a to replace step S75. Therefore, the following describes step S75a, and the description of steps S70 to S74 and S76 to S79 is omitted.

(S75a) The selection control unit 120 determines whether all $\Delta H$ for i = 1 to n calculated in step S70 are positive for the replica in question. If all $\Delta H$ are positive, the process proceeds to step S77. Otherwise, the process proceeds to step S76.

As illustrated in FIG. 21, the selection control unit 120 may switch the balancing function in the case where all $\Delta H$ are positive, that is, in the case where the state is trapped in a local solution. By switching the bit selection rule in the search process, the data processing apparatus 100 is able to attempt to escape from the local solution.

As described above, the data processing apparatus 100 of the second embodiment is able to promote a transition to a better state by switching a balancing function according to a problem and a solution search status, which improves the computational efficiency in solving combinatorial optimization problems, sampling, and others. For example, the data processing apparatus 100 is able to suppress a state to be accepted in the search process from remaining in a local area of the state space, thereby accelerating the solution search.

In this connection, the selection control unit 120 may set a balancing function for each of a plurality of replicas used in the PT method. Even in this case, the data processing apparatus 100 is able to improve the computational efficiency in solving combinatorial optimization problems, sampling, and others.

As described above, the data processing apparatus 100 performs the following process, for example. In the following description, the search processing unit 110 may be read as the search unit 11, and the selection control unit 120 may be read as the control unit 12.

The search processing unit 110 performs a search process. In the search process, a first process and a second processing are iteratively performed. The first process is a process of selecting a change-target state variable from the plurality of state variables included in an evaluation function, based on the amounts of change in the value of the evaluation function caused by updating the values of the individual state variables and a first function that is a function representing a selection criterion for the change-target state variable according to the amounts of change. The second process is a process of updating the value of the change-target state variable selected in the first process. The selection control unit 120 switches the function used in the search process by the search processing unit 110, to a second function different from the first function.

By doing so, the data processing apparatus 100 is able to improve the computational efficiency. The balancing function h(r) described above corresponds to the function representing the selection criterion for a state variable.

More specifically, the function representing the selection criterion for a state variable weights the state transition caused by updating the value of the change-target state variable, based on the amount of change in the value of the evaluation function. By switching the function, the selection control unit 120 controls the selection probability for each of the plurality of state variables corresponding to the amounts of change in the evaluation function when the search processing unit 110 updates the value of the change-target state variable. Thus, the data processing apparatus 100 is easily able to control the selection probability for each state variable by switching the function (balancing function).

Here, h(r) is a function that weights the probability ratio $r = \pi(y)/\pi(x)$ as described earlier. $\pi(y)/\pi(x)$ is a function of the difference $\Delta H$ in the evaluation value corresponding to a state transition from the current state x to a transition destination candidate y. Therefore, h(r) may be regarded as a function that weights the state transition corresponding to $\Delta H$.

The selection control unit 120 selects the first function and the second function from a plurality of functions including the following example functions. A first example is a function in which the weights for state transitions that each cause an amount of change indicating an improvement in the value of the evaluation function are all set to 1, and the weights for state transitions that each cause an amount of change indicating a deterioration in the value of the evaluation function are set to values less than 1 and decrease as the absolute value of the amount of change increases. A second example is a function in which the weights for state transitions that each cause an amount of change indicating a deterioration in the value of the evaluation function are all set to 1, and the weights for state transitions that each cause an amount of change indicating an improvement in the value of the evaluation function are set to values greater than 1 and increase as the absolute value of the amount of change increases. A third example is a function in which, as the degree of an improvement in the value of the evaluation function based on an amount of change in the value of the evaluation function increases, the weight for the state transition corresponding to the amount of change is set to a larger value. Accordingly, the data processing apparatus 100 is able to appropriately control the selection probabilities for the state variables.

Here, in the case where the value of the evaluation function is to be minimized, a negative amount of change in the value of the evaluation function indicates an improvement in the value or the state, whereas a positive amount of change in the value of the evaluation function indicates a deterioration in the value of the evaluation function or the state.

More specifically, for example, in a problem that minimizes the value of the evaluation function, the above first to third example functions are expressed as follows. The first example function is a function in which the weights for state transitions that each cause a negative amount of change in the value of the evaluation function are all set to 1, and the weights for state transitions that each cause a positive amount of change are set to values less than 1 and decrease as the absolute value of the amount of change increases. The second example function is a function in which the weights for state transitions that each cause a positive amount of change in the value of the evaluation function are all set to 1, and the weights for state transitions that each cause a negative amount of change are set to values greater than 1 and increase as the absolute value of the amount of change increases. The third example function is a function in which, as the amount of change in the value of the evaluation function decreases, the weight for the state transition is set to a larger value. The above-described h(r) = min(1, r) is an example of the first example function. h(r) = max(1, r) is an example of the second example function. h(r) = $\sqrt{r}$ is an example of the third example function.

By reversing the positive and negative signs of the evaluation function, the positive and negative signs of the amounts of change in the evaluation function are also reversed. For example, in a problem that maximizes the value of the evaluation function, a positive amount of change indicates an improvement in the solution, and a negative amount of change indicates a deterioration in the solution. However, by reversing the signs of the evaluation function of the problem, a negative amount of change is made to indicate an improvement in the solution, and a positive amount of change is made to indicate a deterioration in the solution.

The selection control unit 120 may detect timing of switching the function used in the search process, based on information obtained from the search processing unit 110 during the execution of the search process. By doing so, the data processing apparatus 100 is able to switch the state variable selection rule according to the search status.

For example, the selection control unit 120 assigns the first function to a first temperature value and assigns the second function to a second temperature value. When the temperature value used in the search process is switched from the first temperature value to the second temperature value, the selection control unit 120 switches the function used in the search process from the first function to the second function. By doing so, the data processing apparatus 100 is able to switch the selection rule to an appropriate one according to the temperature value. In this connection, the method of assigning a function to each temperature value in this manner may be used in, for example, the PT method, the ST method, the SA method, and others.

Alternatively, when the number of updates of the value of the change-target state variable has exceeded a threshold, the selection control unit 120 may switch the function used in the search process from the first function to the second function. By doing so, the data processing apparatus 100 is able to select an appropriate selection rule according to the progress of the search process. In this connection, the function may be switched when the number of updates has reached a threshold.

In addition, the selection control unit 120 may calculate a sample weight, which is a weight for a state represented by a set of the values of the plurality of state variables obtained in the search process, on the basis of the first function. The selection control unit 120 may detect timing of switching the function used in the search process from the first function to the second function on the basis of the sample weight. By doing so, the data processing apparatus 100 is able to switch the selection rule to an appropriate one according to the search status. For example, in the case where it is determined, based on the comparison between the sample weight and a threshold, that the current state variable selection rule is unlikely to cause a transition to a better state, the data processing apparatus 100 is able to switch the function to switch the selection rule, thereby promoting a transition to a better state.

In addition, the selection control unit 120 may switch the function used in the search process from the first function to the second function, when the number of updates of the value of the change-target state variable has exceeded a threshold without updating a best value as the value of the evaluation function. By doing so, the data processing apparatus 100 is able to switch the selection rule if the current state variable selection rule is not expected to improve the solution, thereby promoting a transition to a better state. The best value here is a minimum value in the case the value of the evaluation function is to be minimized. The function may be switched when the number of updates has reached a threshold.

Further, the selection control unit 120 may switch the function used in the search process from the first function to the second function, when all amounts of change in the value of the evaluation function caused by updating the individual values of the plurality of state variables indicate deteriorations in the value of the evaluation function. For example, in the case where the value of the evaluation function is to be minimized, the selection control unit 120 may switch the function used in the search process from the first function to the second function, when the amounts of change in the value of the evaluation function are all positive.

By doing so, the data processing apparatus 100 is able to switch the function (balancing function) to switch the state variable selection rule, when it is determined that a local solution is reached. By doing so, the data processing apparatus 100 is able to attempt to escape from the local solution to promote a transition to a better state.

In addition, the search processing unit 110 selects a change-target state variable whose value is to be updated, based on the first function or the second function, a temperature value, and random number values corresponding respectively to the plurality of state variables. By doing so, the data processing apparatus 100 is able to appropriately select a state variable whose value is to be updated.

Furthermore, the data processing apparatus 100 may perform the following process. The search processing unit 110 performs the search process in parallel across a plurality of replicas. In the search process, a first process and a second process are iteratively performed. Each of the plurality of replicas represents the values of the plurality of state variables. The first process is a process of selecting a change-target state variable from the plurality of state variables included in an evaluation function, based on the amounts of change in the value of the evaluation function caused by updating the values of the individual state variables and a first function that is a function representing a selection criterion for the change-target state variable according to the amounts of change. The second process is a process of updating the value of the change-target state variable selected in the first process. The selection control unit 120 sets the first function as the function used in the search process for a first replica among the plurality of replicas. The selection control unit 120 sets a second function different from the first function as the function used in the search process for a second replica among the plurality of replicas.

By doing so, the data processing apparatus 100 is able to improve the computational efficiency. The selection control unit 120 does not need to change the function (balancing function) set for each replica until the completion of the search process, or may switch the function for each replica to a function corresponding to a new temperature value, according to a change in the temperature value set for that replica.

The search processing unit 110 and the selection control unit 120 may be implemented by the same processor or may be implemented by different processors. For example, both the search processing unit 110 and the selection control unit 120 may be implemented by the processor 101. Alternatively, both the search processing unit 110 and the selection control unit 120 may be implemented by the processor 108a. Yet alternatively, the search processing unit 110 may be implemented by the processor 108a, and the selection control unit 120 may be implemented by the processor 101. The selector 130 may be implemented by the processor 108a or the processor 101.

The information processing of the first embodiment may be implemented by causing the control unit 12 to execute a program. The information processing of the second embodiment may be implemented by causing the processor 101 to execute a program. The program may be recorded on the computer-readable recording medium 53.

For example, the program may be distributed by distributing the recording medium 53 on which the program is recorded. The program may be stored in another computer and distributed via a network. For example, a computer may store (install) the program recorded on the recording medium 53 or the program received from another computer in a storage device such as the RAM 102 or the HDD 103, read the program from the storage device, and execute the program.

In one aspect, it is possible to improve the computational efficiency.

**Claims**

1.  A data processing apparatus comprising:

    search means (11) for performing a search process that iteratively performs a first process and a second process, the first process being configured to select a change-target state variable from a plurality of state variables included in an evaluation function, based on amounts of change in a value of the evaluation function caused by updating values of individual ones of the plurality of state variables and a first function that is a function representing a selection criterion for the change-target state variable according to the amounts of change, the second process being configured to update a value of the selected change-target state variable; and
    control means (12) for switching the function used by the search means in the search process to a second function different from the first function.

2.  The data processing apparatus according to claim 1, wherein

    the function weights a state transition caused by updating the value of the change-target state variable, based on an amount of change in the value of the evaluation function caused by updating the value of the change-target state variable, and
    the control means (12) controls, by switching the function, a selection probability for each of the plurality of state variables corresponding to the amounts of change in updating the value of the change-target state variable by the search means.

3.  The data processing apparatus according to claim 2, wherein the control means (12) selects the first function and the second function from a plurality of functions including

    a function in which weights for state transitions that each cause an amount of change indicating an improvement in the value of the evaluation function are all set to 1, and weights for state transitions that each cause an amount of change indicating a deterioration in the value of the evaluation function are set to values less than 1 and decrease as an absolute value of the amount of change increases,
    a function in which weights for state transitions that each cause an amount of change indicating a deterioration in the value of the evaluation function are all set to 1, and weights for state transitions that each cause an amount of change indicating an improvement in the value of the evaluation function are set to values greater than 1 and increase as an absolute value of the amount of change increases, and
    a function in which, as a degree of an improvement in the value of the evaluation function based on an amount of change in the value of the evaluation function increases, a weight for a state transition corresponding to the amount of change is set to a larger value.

4.  The data processing apparatus according to claim 1, wherein the control means (12) detects timing of switching the function, based on information obtained from the search means during execution of the search process.

5.  The data processing apparatus according to claim 1, wherein the control means (12)

    assigns the first function to a first temperature value and the second function to a second temperature value, and
    switches the function used in the search process from the first function to the second function, upon detecting that a temperature value used in the search process is switched from the first temperature value to the second temperature value.

6. The data processing apparatus according to claim 1, wherein the control means (12) switches the function used in the search process from the first function to the second function, upon detecting that a number of updates of the value of the change-target state variable has exceeded a threshold.

7. The data processing apparatus according to claim 1, wherein the control means (12)

calculates, based on the first function, a sample weight that is a weight of a state represented by a set of values of the plurality of state variables obtained in the search process; and
detects timing of switching the function used in the search process from the first function to the second function, based on the sample weight.

8. The data processing apparatus according to claim 1, wherein the control means (12) switches the function used in the search process from the first function to the second function, upon detecting that a number of updates of the value of the change-target state variable has exceeded a threshold without updating a best value as the value of the evaluation function.

9. The data processing apparatus according to claim 1, wherein the control means (12) switches the function used in the search process from the first function to the second function, upon detecting that all the amounts of change in the value of the evaluation function caused by updating the values of the individual ones of the plurality of state variables indicate a deterioration in the value of the evaluation function.

10. The data processing apparatus according to claim 1, wherein the search means (11) selects the change-target state variable from the plurality of state variables, based on the first function or the second function, a temperature value, and random number values corresponding respectively to the plurality of state variables.

11. A data processing method executed by a computer, the data processing method comprising:

performing a search process that iteratively performs a first process and a second process, the first process being configured to select a change-target state variable from a plurality of state variables included in an evaluation function, based on amounts of change in a value of the evaluation function caused by updating values of individual ones of the plurality of state variables and a first function that is a function representing a selection criterion for the change-target state variable according to the amounts of change, the second process being configured to update a value of the selected change-target state variable; and
switching the function used in the search process to a second function different from the first function.

12. A computer program that causes a computer to perform a process comprising:

performing a search process that iteratively performs a first process and a second process, the first process being configured to select a change-target state variable from a plurality of state variables included in an evaluation function, based on amounts of change in a value of the evaluation function caused by updating values of individual ones of the plurality of state variables and a first function that is a function representing a selection criterion for the change-target state variable according to the amounts of change, the second process being configured to update a value of the selected change-target state variable; and
switching the function used in the search process to a second function different from the first function.

DATA PROCESSING APPARATUS 10

SEARCH UNIT 11

FUNCTION $h_1(r)$

⇩

FUNCTION $h_2(r)$

CONTROL UNIT 12

STORAGE UNIT 13

$$j = \underset{i}{\mathrm{argmin}}\left[F(\Delta H_i) + log\left(-log(r_i)\right)\right]$$

$$F(\Delta H_i) = -log\,\underline{h(\exp(-\Delta H_i/T))}$$

# FIG. 1

FIG. 2A

FIG. 2B

FIG. 2C

| h(r) / TRANSITION TYPE | $\min(1, r)$ | $\sqrt{r}$ | $\max(1, r)$ |
|---|---|---|---|
| BASIC TRANSITION | RANDOM TRANSITION IN DIRECTION IN WHICH ENERGY DECREASES OR REMAINS UNCHANGED | STOCHASTIC TRANSITION ACCORDING TO DEGREE OF ENERGY DECREASE | STOCHASTIC TRANSITION ACCORDING TO DEGREE OF ENERGY DECREASE |
| TRANSITION WHEN LOCAL SOLUTION IS REACHED | STOCHASTIC TRANSITION ACCORDING TO DEGREE OF ENERGY INCREASE | STOCHASTIC TRANSITION ACCORDING TO DEGREE OF ENERGY INCREASE | RANDOM TRANSITION |

30

FIG. 3

FIG. 4

100

DATA PROCESSING APPARATUS

120

SEARCH PROCESSING UNIT 110

SELECTION CONTROL UNIT

SELECTOR 130

BF1 BF2 BF3 140

BF HOLDING UNIT

FIG. 5

FIG. 6

FIG. 7

FIG. 8

SELECTION AND UPDATE
OPERATION
START

S20

CALCULATE ΔH

S21

BIT SELECTION BASED ON BF

S22

BIT FLIP

S23

UPDATE ENERGY

S24

UPDATE LOCAL FIELD

END

# FIG. 9

120

SELECTION
CONTROL UNIT

$T_1, BF_1$ ··· $T_{k,} BF_k$ ··· $T_{M,} BF_M$

PERFORM SEARCHES SPECIFIED BY SETS
OF (TEMPERATURE VALUE AND
BALANCING FUNCTION) WITH EQUAL
PROBABILITY

FIG. 10

```
        ┌─────────────┐
        │    START    │
        └──────┬──────┘
               │            S30
        ┌──────▼──────────────┐
        │   INITIALIZATION    │
        └──────┬──────────────┘
               │            S31
        ┌──────▼──────────────┐
        │ SELECT BF FOR EACH  │
        │ TEMPERATURE VALUE   │
        └──────┬──────────────┘
               │            S32
        ┌──────▼──────────────┐
        │ SELECT SET OF       │
        │ TEMPERATURE VALUE   │
        │ AND BF              │
        └──────┬──────────────┘
               │            S33
        ┌──────▼──────────────┐
        │   ITERATION LOOP    │
        └──────┬──────────────┘
               │            S34
        ┌──────▼──────────────┐
        │ SELECTION AND UPDATE│
        │    OPERATION        │
        └──────┬──────────────┘
               │            S35
        ┌──────▼──────────────┐
        │   ITERATION LOOP    │
        └──────┬──────────────┘
               │            S36
        ┌──────▼──────────────┐
        │       END?          │───► NO
        └──────┬──────────────┘
               │ YES
        ┌──────▼──────┐
        │     END     │
        └─────────────┘
```

FIG. 11

FIG. 12

START

INITIALIZATION — S40

REPLICA LOOP — S41

ITERATION LOOP — S42

COUNT NUMBER OF ITERATIONS — S43

SELECTION AND UPDATE OPERATION — S44

ITERATION LOOP — S45

REPLICA LOOP — S46

END? — S47

NO

YES

END

FIG. 13

SELECTION AND UPDATE
OPERATION
START

NUMBER OF ITERATIONS > THRESHOLD? — S50

YES

SELECT AND SWITCH BF — S51

INITIALIZE NUMBER OF ITERATIONS — S52

NO

CALCULATE $\Delta H$ — S53

BIT SELECTION BASED ON BF — S54

BIT FLIP — S55

UPDATE ENERGY — S56

UPDATE LOCAL FIELD — S57

END

# FIG. 14

120

SELECTION
CONTROL UNIT

BALANCING
FUNCTION TO BE
USED IN SEARCH

$BF_0$

$BF_1$

$\cdots$

TIME

INDEX VALUE Q $>$
THRESHOLD

FIG. 15

```
                          START
                            |
                            v
                      +-------------+    S40
                      | INITIALIZATION |
                      +-------------+
                            |
                            v   <--------------+
                    /-----------------\  S41   |
                    |  REPLICA LOOP    |        |
                    \-----------------/         |
                            |                   |
                            v                   |
                    /-----------------\  S42    |
                    |  ITERATION LOOP  |        |
                    \-----------------/         |
                            |                   |
                            v                   |
              +--------------------------+ S43a |
              | CALCULATE INDEX VALUE Q  |      |
              | BASED ON SAMPLE WEIGHT   |      |
              +--------------------------+      |
                            |                   |
                            v                   |
              ||-----------------------|| S44a  |
              ||  SELECTION AND UPDATE ||       |
              ||      OPERATION        ||       |
              ||-----------------------||       |
                            |                   |
                            v                   |
                    /-----------------\  S45    |
                    |  ITERATION LOOP  |        |
                    \-----------------/         |
                            |                   |
                            v                   |
                    /-----------------\  S46    |
                    |  REPLICA LOOP    |        |
                    \-----------------/         |
                            |                   |
                            v          S47      |
                     <--- END? --->  NO --------+
                            |
                           YES
                            v
                          END
```

FIG. 16

SELECTION AND
UPDATE OPERATION
START

S50a

INDEX VALUE Q > THRESHOLD?

NO

YES

S51a

SELECT AND SWITCH BF

S52a

INITIALIZE INDEX VALUE Q

S53

CALCULATE ΔH

S54

BIT SELECTION BASED ON BF

S55

BIT FLIP

S56

UPDATE ENERGY

S57

UPDATE LOCAL FIELD

END

# FIG. 17

FIG. 18

```
         ┌─────────────┐
         │    START    │
         └─────────────┘
                │
                ▼                        ⌐S60
    ┌───────────────────────────┐
    │      INITIALIZATION        │
    └───────────────────────────┘
                │
                ▼                        ⌐S61
    ┌───────────────────────────┐
    │       REPLICA LOOP         │
    └───────────────────────────┘
                │
                ▼                        ⌐S62
    ┌───────────────────────────┐
    │      ITERATION LOOP        │
    └───────────────────────────┘
                │
                ▼                        ⌐S63
    ┌───────────────────────────┐
    │   SELECTION AND UPDATE     │
    │        OPERATION           │
    └───────────────────────────┘
                │
                ▼                        ⌐S64
    ┌───────────────────────────┐
    │      ITERATION LOOP        │
    └───────────────────────────┘
                │
                ▼                        ⌐S65
    ┌───────────────────────────┐
    │       REPLICA LOOP         │
    └───────────────────────────┘
                │
                ▼                        ⌐S66
    <          END?              >──── NO
                │
               YES
                │
                ▼
         ┌─────────────┐
         │     END     │
         └─────────────┘
```

# FIG. 19

```
        ┌─────────────────────┐
        │   SELECTION AND     │
        │ UPDATE OPERATION    │
        │      START          │
        └─────────────────────┘
                  │
                  ▼            S70
        ┌─────────────────────┐
        │    CALCULATE ΔH     │
        └─────────────────────┘
                  │
                  ▼            S71
        ┌─────────────────────┐
        │ BIT SELECTION BASED ON BF │
        └─────────────────────┘
                  │
                  ▼            S72
        ┌─────────────────────┐
        │      BIT FLIP       │
        └─────────────────────┘
                  │
                  ▼            S73
        ┌─────────────────────┐
        │   UPDATE ENERGY     │
        └─────────────────────┘
                  │
                  ▼            S74
        ┌─────────────────────┐
        │ UPDATE LOCAL FIELD  │
        └─────────────────────┘
                  │
                  ▼            S75                        S77
        ╱─────────────────────╲        ┌─────────────────────────┐
        │    H < minH ?       │─ NO ──▶│    cnt ← cnt + 1        │
        ╲─────────────────────╱        └─────────────────────────┘
                  │ YES                            │
                  ▼            S76                  ▼            S78
        ┌─────────────────────┐        ╱─────────────────────────╲
        │      cnt = 0        │◀──┐    │       cnt > τ ?         │─ NO ─▶
        └─────────────────────┘   │    ╲─────────────────────────╱
                  │               │              │ YES         S79
                  │               │              ▼
                  │               │    ┌─────────────────────────┐
                  │               └────│  CONTROL BF SWITCHING   │
                  │                    └─────────────────────────┘
                  ▼
        ┌─────────────────────┐
        │        END          │
        └─────────────────────┘
```

$H < minH$ ?

$cnt > \tau$ ?

FIG. 20

```
          ┌─────────────────────┐
          │    SELECTION AND    │
          │  UPDATE OPERATION   │
          │       START         │
          └─────────────────────┘
                     │
                     ▼              ⌒ S70
          ┌─────────────────────┐
          │    CALCULATE ΔH      │
          └─────────────────────┘
                     │
                     ▼              ⌒ S71
          ┌─────────────────────┐
          │ BIT SELECTION BASED ON BF │
          └─────────────────────┘
                     │
                     ▼              ⌒ S72
          ┌─────────────────────┐
          │      BIT FLIP       │
          └─────────────────────┘
                     │
                     ▼              ⌒ S73
          ┌─────────────────────┐
          │   UPDATE ENERGY     │
          └─────────────────────┘
                     │
                     ▼              ⌒ S74
          ┌─────────────────────┐
          │  UPDATE LOCAL FIELD │
          └─────────────────────┘
                     │
                     ▼              ⌒ S75a                          ⌒ S77
    ╱─────────────────────────╲              YES      ┌─────────────────────────┐
   ⟨   ARE ALL  ΔH POSITIVE?   ⟩─────────────────────▶│      cnt ← cnt + 1      │
    ╲─────────────────────────╱                        └─────────────────────────┘
                     │                                             │
                  NO │                                             ▼           ⌒ S78
                     ▼           ⌒ S76                   ╱─────────────────────────╲
          ┌─────────────────────┐                      ⟨        cnt > τ ?         ⟩──── NO
          │       cnt = 0       │◀──────────┐           ╲─────────────────────────╱
          └─────────────────────┘           │                      │
                     │                       │                  YES │          ⌒ S79
                     │                       │                      ▼
                     │                       │           ┌─────────────────────────┐
                     │                       └───────────│   CONTROL BF SWITCHING  │
                     │                                   └─────────────────────────┘
                     │
                     ▼
          ┌─────────────────────┐
          │        END          │
          └─────────────────────┘
```

## FIG. 21

# EUROPEAN SEARCH REPORT

**Application Number**

EP 25 21 9161

## DOCUMENTS CONSIDERED TO BE RELEVANT

| Category | Citation of document with indication, where appropriate, of relevant passages | Relevant to claim |
|---|---|---|
| X | Quan Zhou: "Importance Tempering of MCMC Schemes", , 15 June 2024 (2024-06-15), XP093373453, Retrieved from the Internet: URL:https://web.archive.org/web/2024061510 4449/https://zhouquan34.github.io/papers/I IT2023_UK_nopause.pdf [retrieved on 2026-03-05] * the whole document * | 1-12 |
| X | US 2003/144748 A1 (NAKAMURA SHIZUKA [JP] ET AL) 31 July 2003 (2003-07-31) * abstract * * paragraph [0001] - paragraph [0024] * * paragraph [0034] - paragraph [0064]; figures 1-7 * | 1-12 |

**CLASSIFICATION OF THE APPLICATION (IPC)**

INV.
G06N5/01
G06N7/01

**TECHNICAL FIELDS SEARCHED (IPC)**

G06N

The present search report has been drawn up for all claims

| Place of search | Date of completion of the search | Examiner |
|---|---|---|
| The Hague | 5 March 2026 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 9161

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2026

| Patent document cited in search report | Publication date | Patent family member(s) | Publication date |
|---|---|---|---|
| US 2003144748 A1 | 31-07-2003 | JP 2003223322 A<br>US 2003144748 A1 | 08-08-2003<br>31-07-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2023181131 A
- WO 2021084629 A
- JP 2023107619 A
- US 20230401282

**Non-patent literature cited in the description**

- **QUAN ZHOU** ; **AARON SMITH**. Rapid Convergence of Informed Importance Tempering. *In International Conference on Artificial Intelligence and Statistics*, 2022, https: arxiv.org/abs/2107.10827>
- **JEFFREY S. ROSENTHAL**. *Jump Markov Chains and Rejection-Free Metropolis Algorithms*, 2020, https: arxiv.org/abs/1910.13316>